(19)

Europäisches Patentamt

European Patent Office

Office européen des brevets

(11) **EP 4 176 302 B1**

(12) **EUROPEAN PATENT SPECIFICATION**

(45) Date of publication and mention
of the grant of the patent:
**30.07.2025 Bulletin 2025/31**

(21) Application number: **21737455.2**

(22) Date of filing: **29.06.2021**

(51) International Patent Classification (IPC):
**G02B 27/01** *(2006.01)* **F21V 8/00** *(2006.01)*

(52) Cooperative Patent Classification (CPC):
**G02B 27/0172; G02B 6/0016; G02B 6/0036;**
**G02B 6/0076;** G02B 2027/0109; G02B 2027/0112;
G02B 2027/0123

(86) International application number:
**PCT/EP2021/067931**

(87) International publication number:
**WO 2022/002990 (06.01.2022 Gazette 2022/01)**

(54) **FULL-COLOR WAVEGUIDE COMBINER WITH EMBEDDED METAGRATING**

VOLLFARBIGER WELLENLEITERKOMBINIERER MIT EINGEBETTETER METAGITTERUNG

COMBINATEUR DE GUIDE D'ONDES À COULEUR COMPLÈTE AVEC MÉTALLISATION INCORPORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2020 EP 20305744**

(43) Date of publication of application:
**10.05.2023 Bulletin 2023/19**

(73) Proprietor: **InterDigital CE Patent Holdings, SAS
75017 Paris (FR)**

(72) Inventors:
• **SHRAMKOVA, Oksana
35576 CESSON-SÉVIGNÉ (FR)**

• **DRAZIC, Valter
35576 CESSON-SÉVIGNÉ (FR)**

(74) Representative: **AWA Sweden AB
Box 5117
200 71 Malmö (SE)**

(56) References cited:
**US-A1- 2017 131 551 US-A1- 2019 187 465**

• **KRESS BERNARD C: "Optical waveguide
combiners for AR headsets: features and
limitations", SPIE PROCEEDINGS;
[PROCEEDINGS OF SPIE ISSN 0277-786X], SPIE,
US, vol. 11062, 16 July 2019 (2019-07-16), pages
110620J - 110620J, XP060122993, ISBN:
978-1-5106-3673-6, DOI: 10.1117/12.2527680**

**Description**

**CROSS-REFERENCE TO RELATED APPLICATIONS**

The present application claims priority of EP20305744, entitled "FULL-COLOR WAVEGUIDE COMBINER WITH EMBEDDED METAGRATING," filed 2 July 2020.

**BACKGROUND**

The present disclosure relates to the field of optics and photonics and more specifically to optical device comprising at least one diffraction grating. It may find applications in the field of conformable and wearable optics (e.g. ARNR glasses (Augmented RealityNirtual Reality)), as well as in a variety of other electronic consumer products comprising displays and/or lightweight imaging systems, including head up displays (HUD), as for example in the automotive industry.

This section is intended to introduce the reader to various aspects of art, which may be related to various aspects of the present disclosure that are described and/or claimed below. This discussion is believed to be helpful in providing the reader with background information to facilitate a better understanding of the various aspects of the systems and methods described herein. Accordingly, it should be understood that these statements are to be read in this light, and not as admissions of prior art.

Development of ARNR glasses (and more generally eyewear electronic devices) is associated with a number of challenges, including reduction of size and weight of such devices as well as improvement of the image quality (in terms of contrast, field of view, color depth, etc.) that should be realistic enough to enable a truly immersive user experience.

In such ARNR glasses, various types of refractive and diffractive lenses and beam-forming components are used to guide the light from a micro-display or a projector towards the human eye, allowing the formation of a virtual image that is superimposed with an image of the physical world seen with a naked eye (in case of AR glasses) or captured by a camera (in case of VR glasses).

Some of kinds of ARNR glasses utilize optical waveguides wherein light propagates into the optical waveguide by TIR (for total internal reflection) only over a limited range of internal angles. The FoV (for field of view) of the waveguide depends on the material of the waveguide.

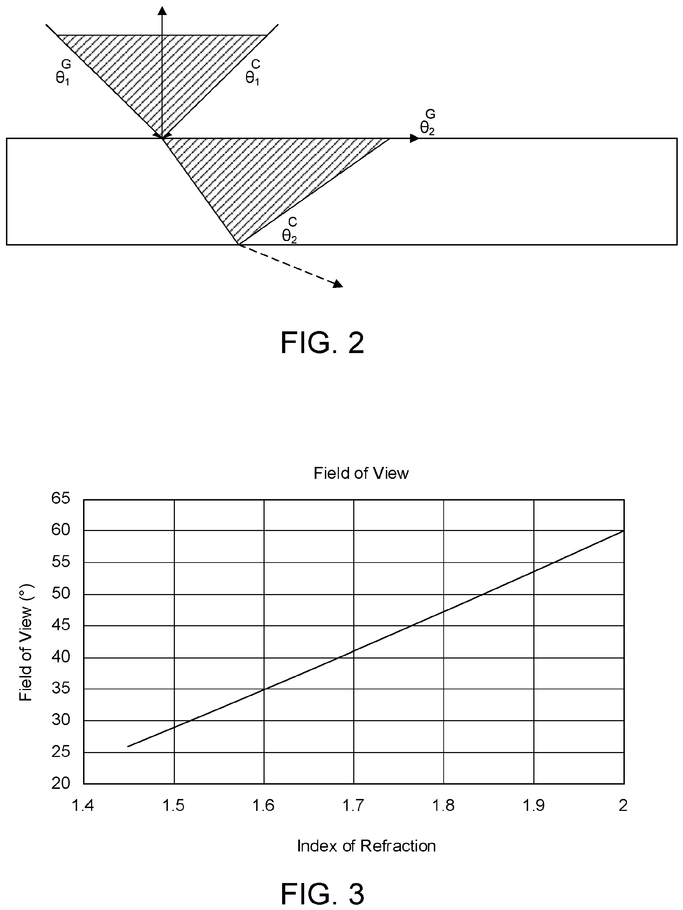

The FoV of a waveguide may be expressed as the maximum span of $\theta_1^+ - \theta_1^-$ which propagates into the waveguide by TIR. In some cases, as illustrated by FIG. 2, the biggest angular span that can be coupled into the waveguide can be expressed by two rays: the critical ray ($\theta_1^{\mathcal{C}}$ in FIG. 2) having incident angle $\theta_1^{\mathcal{C}}$ and the grazing ray ($\theta_1^{\mathcal{G}}$ in FIG. 2) having incident angle $\theta_1^{\mathcal{G}}$. The critical ray is the light ray that just diffracts into the waveguide at the critical angle $\theta_2^{\mathcal{C}}$ defined by sin $\theta_2^{\mathcal{C}} = \dfrac{1}{n_2(\lambda)}$ where $n_2$ is the refractive index of the waveguide's material and $\lambda$ the wavelength of the incident light. Above the critical angle $\theta_2^{\mathcal{C}}$, total internal reflection (TIR) occurs. The grazing ray is the ray having an input angle that diffracts into the waveguide at grazing incidence, which may be $\theta_2^{\mathcal{G}} = 90°$. The theoretical FoV of a waveguide presented above is for a single mode system where one single diffraction mode is used to carry the image: either +1 or -1 diffraction mode.

The field of view in some systems based on optical waveguides is limited by the angular bandwidth of a glass plate. If we diffract one mode into the glass plate, the FoV is given as a function of the index of refraction of the material of the glass plate. The FoV of a waveguide of refractive index $n_2$ is given by: $\Delta\theta_1 = 2\sin^{-1}\left(\dfrac{n_2-1}{2}\right)$.

FIG. 3 shows a graph for reasonable ranges of $n_2$. For $n_2$ = 1.5 the total field of view for a single mode system is rather limited to $\Delta\theta_1$ = 28.96 degrees. It can be seen that 60 degrees FoV is a practical limit for some types of waveguides because it is not generally feasible to use materials of refractive index above 2.0.

The field of view of an optical waveguide can be further extended by taking advantage of a second direction of propagation inside of the waveguide, doubling it.

In WO2017180403, a waveguide with an extended field of view is proposed, wherein a dual mode image propagation is used. In this method, they use the diffraction mode +1 to carry one side of the image in one direction and the -1 mode to propagate the other side of the image into the opposite direction into the waveguide. Combining both half images is done thanks to the pupil expanders and out-couplers at the exit of the waveguide so that the user sees one single image.

Using diffraction orders higher than one has the effect of multiplying the wavelength by the order which is used in the diffraction equation. As the grating pitch is directly a function of the product $M\lambda$, this means that the grating pitch is multiplied by M. This allows for structures used for the in-coupler to be larger and opens up new possibilities in the fabrication technology, because nano-imprinting could be used. Also, fewer lines per mm for the grating density are necessary and the fabrication process can be improved since the structures will no more be sub-wavelength but over-wavelength. Such an optical waveguide using both $\pm 2$ diffraction orders provides a FoV of about 60° with a refractive index of 1.5. It is thus possible to get a 60° field of view using a material with refractive index 1.5, instead of 2 in single mode. However, a 60° FoV is still limited with respect to the total human field of view where stereopsis is effective for human vision and which is about 114°.

Full RGB combiners using two-waveguide architectures have been investigated in which the green FoV is shared between the first and second waveguides, as described in B. C. Kress, "Optical waveguide combiners for AR headsets: features and limitation," Proc. of SPIE, vol. 11062, p. 110620J, 2019. A double waveguide architecture comprising embedded incoupling gratings is furthermore described in US2019187465.

SUMMARY

References in the specification to "one embodiment," "an embodiment," "an example embodiment," and the like indicate that the embodiment described may include a particular feature, structure, or characteristic; but not every embodiment necessarily includes that particular feature, structure, or characteristic. Moreover, such phrases are not necessarily referring to the same embodiment. Further, when a particular feature, structure, or characteristic is described in connection with an embodiment, such feature, structure, or characteristic may be used in connection with other embodiments whether or not explicitly described.

An optical system according to the invention is specified in appended claim 1.

In some embodiments, the reflective diffractive in-coupler has a grating period selected to couple blue light into the waveguide, and the transmissive diffractive in-coupler has a grating period selected to couple red light into the waveguide.

According to the claimed invention, a spacing between the reflective diffractive in-coupler and the transmissive diffractive in-coupler is no greater than 400nm.

In some embodiments, a spacing between the reflective diffractive in-coupler and the transmissive diffractive in-coupler is no greater than a selected wavelength (in air) of incident light.

Some embodiments further include a second transmissive diffractive in-coupler on the first surface of the waveguide. The second transmissive diffractive in-coupler may have a grating period selected to couple blue light into the waveguide. The second transmissive diffractive in-coupler may have a grating period smaller than a grating period of the reflective diffractive in-coupler.

In some embodiments, the reflective diffractive in-coupler has a grating period $d_1$ and is configured to in-couple light using diffractive order $M_1$, the second transmissive diffractive in-coupler has a grating period $d_3$ and is configured to in-couple light using diffractive order $M_3$, and $\dfrac{d_3}{M_3} < \dfrac{d_1}{M_1}$.

Some embodiments further include an image generator operative to provide an image at an input region including the reflective diffractive in-coupler and the first transmissive diffractive in-coupler. The optical system may be configured to substantially replicate the image at at least one output pupil region, the output pupil region including at least one reflective diffractive out-coupler and at least one transmissive diffractive out-coupler.

In some embodiments, the reflective diffractive in-coupler has a grating period smaller than a grating period of the first transmissive diffractive in-coupler. In some embodiments, the reflective diffractive in-coupler has a grating period $d_1$ and is configured to in-couple light using diffractive order $M_1$, the first transmissive diffractive in-coupler has a grating period $d_2$ and is configured to in-coupler light using diffractive order $M_2$, and $\dfrac{d_1}{M_1} < \dfrac{d_2}{M_2}$.

Some embodiments include an air gap between the reflective diffractive in-coupler and the first transmissive diffractive in-coupler.

An optical method according to the invention is specified in appended claim 12.

In some embodiments, the input region includes a second transmissive diffractive in-coupler on the first surface of the waveguide, and the method further includes coupling light of the first color into the waveguide using the second transmissive diffractive in-coupler. As an example, light of the first color with a relatively low angle of incidence may be coupled by the reflective diffractive in-coupler, while light of the first color with a relatively high angle of incidence may be coupled by the second transmissive diffractive in-coupler.

A method of manufacturing according to the invention is specified in appended claim 15.

**BRIEF DESCRIPTION OF THE DRAWINGS**

FIG. 1A is a cross-sectional schematic view of a waveguide display.

FIG. 1B is a schematic illustration of a binocular waveguide display with a first layout of diffractive optical components.

FIG. 1C is a schematic illustration of a binocular waveguide display with a second layout of diffractive optical components.

FIG. 1D is a schematic exploded view of a double-waveguide display.

FIG. 1E is a cross-sectional schematic view of a double-waveguide display.

FIG. 2 is a schematic illustration of a single mode system where a single diffraction mode is used to carry the image using either the +1 or the -1 diffraction mode.

FIG. 3 is an example graph of a waveguide's field of view as a function of the refractive index of its material.

FIG. 4 is a cross-sectional side view of a lens system that provides a real exit pupil.

FIG. 5 is a cross-sectional side view of a lens system suitable for use in some embodiments.

FIG. 6 is a cross-sectional view of a symmetric diffraction grating.

FIG. 7 is a cross-sectional view of another symmetric diffraction grating.

FIG. 8 is a cross-sectional view of a slanted diffraction grating.

FIG. 9 illustrates use of symmetric diffraction with non-symmetrical gratings that employs two different diffraction gratings.

FIG. 10 schematically illustrates typical diffraction efficiencies for the gratings of FIG. 9 as a function of the angle of incidence.

FIG. 11A is a cross-sectional view of a diffraction grating profile as used in some embodiments.

FIG. 11B is a schematic illustration of coupling of light across different angles of incidence using a grating profile as in FIG. 11A.

FIG. 12 is a schematic cross-sectional side view of a waveguide used in some embodiments.

FIG. 13 is a schematic cross-sectional view of a single-waveguide in-coupling system according to some embodiments, illustrating angles of incident and diffracted light.

FIG. 14 is a cross-sectional view of an example unit cell of a metagrating used in some embodiments.

FIG. 15 is a schematic cross-sectional view of a waveguide in an embodiment using a metagrating as described herein.

FIGs. 16A-16C are schematic illustrations of angles of incident and diffracted light characteristic of a metagrating in a single-waveguide system. FIG. 16A illustrates angles of blue light. FIG. 16B illustrates angles of green light. FIG. 16C illustrates angles of red light.

FIG. 17 is a cross-sectional view illustrating a unit cell of an example metagrating with additional phase modifying layer and stop layer.

FIGs. 18A-18C are graphs illustrating diffraction performance of an example AlAs/Si metagrating using the unit cell as depicted in FIG. 17. FIG. 18A illustrates diffraction performance for blue light ($\lambda$=460nm). FIG. 18B illustrates diffraction performance for green light ($\lambda$=530nm). FIG. 18C illustrates diffraction performance for red light ($\lambda$=620nm).

FIG. 19 is a schematic cross-sectional side view of a high FoV full RGB waveguide display system with a metagrating inside the waveguide and an additional grating on an outer surface of the waveguide.

FIGs. 20A-20C are schematic cross sectional views of a full RGB waveguide display system with a metagrating inside the waveguide and an additional grating DG3 on an outer surface of the waveguide, illustrating angles of incident and diffracted light for different wavelengths. FIG. 20A illustrates incident and diffracted angles of blue light. FIG. 20B illustrates incident and diffracted angles of green light. FIG. 20C illustrates incident and diffracted angles of red light.

FIGs. 21A-21C are schematic cross sectional views of another embodiment of a full RGB waveguide display system with a metagrating inside the waveguide and an additional grating DG3 on an outer surface of the waveguide, illustrating angles of incident and diffracted light for different wavelengths. FIG. 21A illustrates incident and diffracted angles of blue light. FIG. 21B illustrates incident and diffracted angles of green light. FIG. 21C illustrates incident and diffracted angles of red light.

FIG. 22 is a schematic cross-sectional view of a unit cell of a diffraction grating with additional layers.

FIGs. 23A-23C are graphs illustrating results of simulating the diffraction performance of a grating incoupler DG3 configured using unit cells as depicted in FIG. 22. FIG. 23A illustrates diffraction performance for blue light ($\lambda$=460nm). FIG. 23B illustrates diffraction performance for green light ($\lambda$=530nm). FIG. 23C illustrates diffraction performance for red light ($\lambda$=620nm).

FIG. 24 is a schematic cross-sectional view of an example waveguide with an incoupler metagrating and an outcoupler metagrating.

FIG. 25 is a schematic cross-sectional view of example steps in a method of manufacturing a waveguide according to some embodiments.

## DETAILED DESCRIPTION

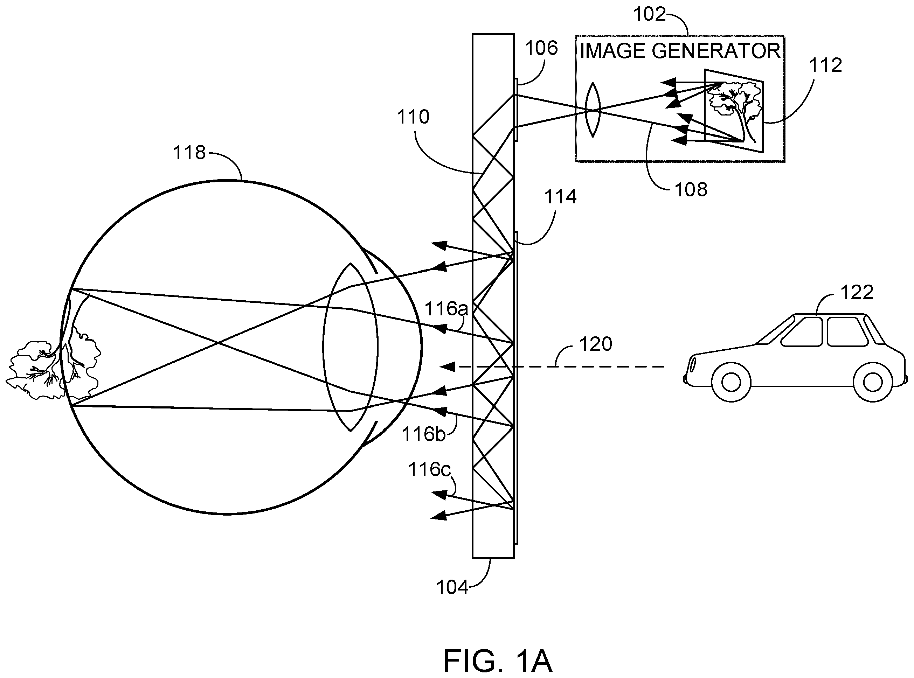

Described herein are waveguide display systems and methods. An example waveguide display device is illustrated in FIG. 1A. FIG. 1A is a schematic cross-sectional side view of a waveguide display device in operation. An image is projected by an image generator 102. The image generator 102 may use one or more of various techniques for projecting an image. For example, the image generator 102 may be a laser beam scanning (LBS) projector, a liquid crystal display (LCD), a light-emitting diode (LED) display (including an organic LED (OLED) or micro LED ($\mu$LED) display), a digital light processor (DLP), a liquid crystal on silicon (LCoS) display, or other type of image generator or light engine.

Light representing an image 112 generated by the image generator 102 is coupled into a waveguide 104 by a diffractive in-coupler 106. The in-coupler 106 diffracts the light representing the image 112 into one or more diffractive orders. For example, light ray 108, which is one of the light rays representing a portion of the bottom of the image, is diffracted by the in-coupler 106, and one of the diffracted orders 110 (e.g. the second order) is at an angle that is capable of being propagated through the waveguide 104 by total internal reflection.

At least a portion of the light 110 that has been coupled into the waveguide 104 by the diffractive in-coupler 106 is coupled out of the waveguide by a diffractive out-coupler 114. At least some of the light coupled out of the waveguide 104 replicates the incident angle of light coupled into the waveguide. For example, in the illustration, out-coupled light rays 116a, 116b, and 116c replicate the angle of the in-coupled light ray 108. Because light exiting the out-coupler replicates the directions of light that entered the in-coupler, the waveguide substantially replicates the original image 112. A user's eye 118 can focus on the replicated image.

In the example of FIG. 1A, the out-coupler 114 out-couples only a portion of the light with each reflection allowing a single input beam (such as beam 108) to generate multiple parallel output beams (such as beams 116a, 116b, and 116c). In this way, at least some of the light originating from each portion of the image is likely to reach the user's eye even if the eye is not perfectly aligned with the center of the out-coupler. For example, if the eye 118 were to move downward, beam 116c may enter the eye even if beams 116a and 116b do not, so the user can still perceive the bottom of the image 112 despite the shift in position. The out-coupler 114 thus operates in part as an exit pupil expander in the vertical direction. The waveguide may also include one or more additional exit pupil expanders (not shown in FIG. 1A) to expand the exit pupil in the horizontal direction.

In some embodiments, the waveguide 104 is at least partly transparent with respect to light originating outside the waveguide display. For example, at least some of the light 120 from real-world objects (such as object 122) traverses the waveguide 104, allowing the user to see the real-world objects while using the waveguide display. As light 120 from real-world objects also goes through the diffraction grating 114, there will be multiple diffraction orders and hence multiple images. To minimize the visibility of multiple images, it is desirable for the diffraction order zero (no deviation by 114) to have a great diffraction efficiency for light 120 and order zero, while higher diffraction orders are lower in energy. Thus, in addition to expanding and out-coupling the virtual image, the out-coupler 114 is preferably configured to let through the zero order of the real image. In such embodiments, images displayed by the waveguide display may appear to be superimposed on the real world.

Some waveguide displays includes more than one waveguide layer. Each waveguide layer may be configured to preferentially convey light with a particular range of wavelengths and/or incident angles from the image generator to the viewer.

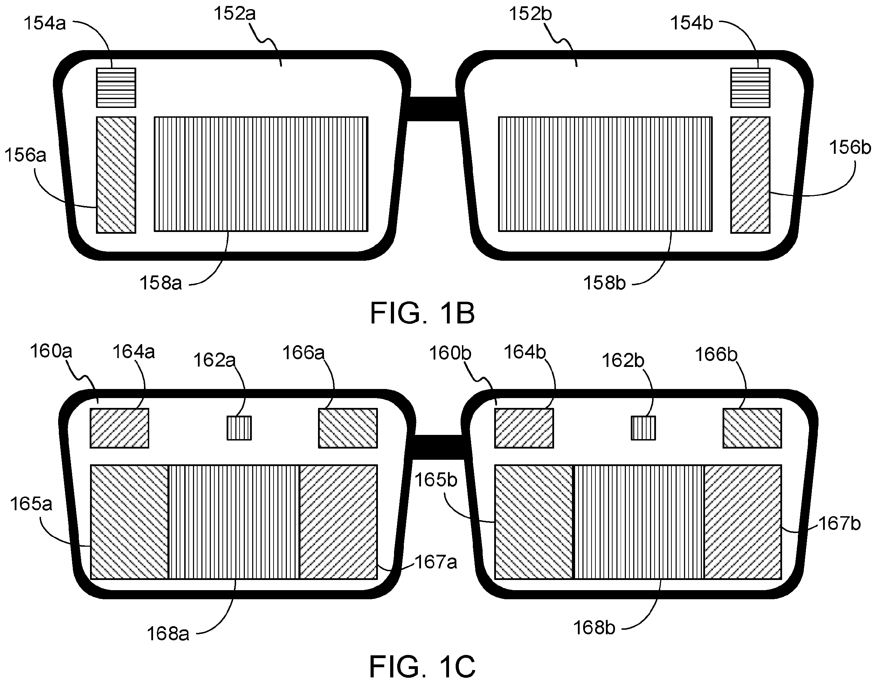

As illustrated in FIGs. 1B and 1C, waveguide displays having in-couplers, out-couplers, and pupil expanders may have various different configurations. An example layout of one binocular waveguide display is illustrated in FIG. 1B. In the example of FIG. 1B, the display includes waveguides 152a, 152b for the left and right eyes, respectively. The waveguides include in-couplers 154a,b, pupil expanders 156a,b, and components 158a,b, which operate as both out-couplers and horizontal pupil expanders. The pupil expanders 156a,b are arranged along an optical path between the in-coupler and the out-coupler. An image generator (not shown) may be provided for each eye and arranged to project light representing an image on the respective in-coupler.

A layout of another binocular waveguide display is illustrated in FIG.1C. In the display of FIG. 1C, the display includes waveguides 160a, 160b for the left and right eyes, respectively. The waveguides include in-couplers 162a,b. Light from different portions of an image may be coupled by the in-couplers 162a,b to different directions within the waveguides. In-coupled light traveling toward the left passes through pupil expanders 164a,b and 165a,b, while in-coupled light traveling toward the right passes through pupil expanders 166a,b and 167a,b. Having passed through the pupil expanders, light is coupled out of the waveguides using out-couplers 168a,b to substantially replicate an image provided at the in-couplers 162a,b.

In different embodiments not according to the claimed invention, different features of the waveguide displays may be provided on different surfaces of the waveguides. For example (as in the configuration of FIG. 1A), the in-coupler and the out-coupler may both be arranged on the anterior surface of the waveguide (away from the user's eye). In other embodiments, the in-coupler and/or the out-coupler may be on a posterior surface of the waveguide (toward the user's eye). The in-coupler and out-coupler may be on opposite surfaces of the waveguide. In some embodiments, one or more of an in-coupler, an out-coupler, and a pupil expander, may be present on both surfaces of the waveguide. The image generator may be arranged toward the anterior surface or toward the posterior surface of the waveguide. The in-coupler is not necessarily on the same side of the waveguide as the image generator. Any pupil expanders in a waveguide may be arranged on the anterior surface, on the posterior surface, or on both surfaces of the waveguide. In displays with more than one waveguide layer, different layers may have different configurations of in-coupler, out-coupler, and pupil expander.

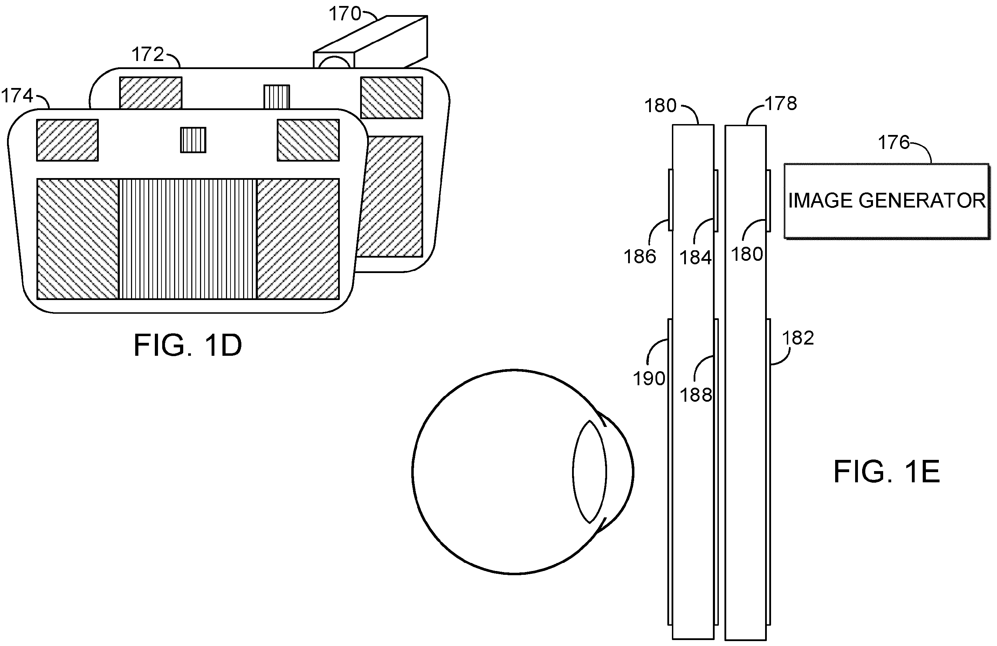

FIG. 1D is a schematic exploded view of a double waveguide display, including an image generator 170, a first waveguide (WG$_1$) 172, and a second waveguide (WG$_2$) 174. FIG. 1E is a schematic side-view of a double waveguide display, including an image generator 176, a first waveguide (WG$_1$) 178, and a second waveguide (WG$_2$) 180. The first waveguide includes a first transmissive diffractive in-coupler (DG1) 180 and a first diffractive out-coupler (DG6) 182. The second waveguide has a second transmissive diffractive in-coupler (DG2) 184, a reflective diffractive in-coupler (DG3) 186, a second diffractive out-coupler (DG4) 188, and a third diffractive out-coupler (DG5) 190. Different displays may use different arrangements of optical components (such as different arrangements of pupil expanders) on the first and second waveguides.

While FIGs. 1A-1E illustrate the use of waveguides in a near-eye display, the same principles may be used in other display technologies, such as head up displays for automotive or other uses.

Example embodiments provide a full RGB (red, green, blue) single waveguide system with high FoV using a metagrating inside the waveguide. Because the metagrating is embedded into the waveguide, it is protected from mechanical damage and degradation. In some embodiments, the metagrating is combined with an additional transmitting diffraction grating on the top of the waveguide.

For waveguides based on diffraction gratings with an optical system generating a synthetic image to be superimpose in the field of view, it is desirable for lens systems to have real and not virtual exit pupils. In other words, its exit pupil location is external to the lens, and it is also at the same time the aperture stop of the lens.

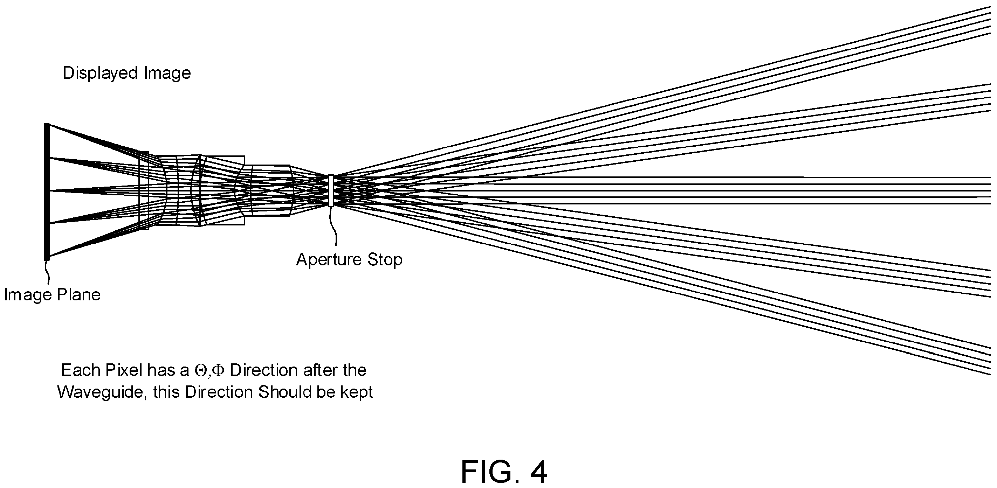

The lens system of FIG. 4 provides an appropriate exit pupil. The system has a disk-shaped aperture stop whose diameter is dependent on the diameter of the lens that limits the most its size. As there are no lenses after that aperture stop, it is the image of itself and hence the exit pupil. It is at this place or at the vicinity thereof that the in-coupler may be set.

A lens system may be referred to as afocal if either one of the object or the image is at infinity. The lens system of FIG. 4 is afocal on the image side as the rays leaving the lens are parallel for each field and there is an image at infinity.

A point position on an object may be referred to as a field. FIG. 4 illustrates rays leaving five different fields. In some cases, a pixel may be considered to be field. The size of a pixel may be assumed to be negligible as compared to other quantities in the system.

As seen in FIG. 4, each field's rays are spilled over the whole exit pupil. Hence, if the aperture of the exit pupil is decreased, this results in some of a pixel's rays being cut off, for all fields at the same time, which means the light intensity will go down. This is the functionality of the aperture stop and this demonstrates that the exit pupil and the aperture stop are the same in that lens and that the exit pupil is real and not virtual.

The pupil can be tiled spatially. This means that the positive side of the pupil (rays hitting the pupil at y>0) will undergo one diffraction process, while rays hitting the pupil at the negative side (y<0), will undergo another diffraction process. The origin of the y axis is the optical axis. The rays hitting the pupil with some angular sign will undergo a particular process, while those hitting with the opposite sign will undergo another diffraction process. Alternatively, pupil angular tiling may lead to rays with a range $[\theta_1, \theta_2]$ being diffracted into one direction in the waveguide while rays with $[-\theta_1, -\theta_2]$ are diffracted into the opposite direction.

Another property of an afocal lens is to map all pixels from the display, which are referenced by their respective position in a cartesian coordinates by their (x,y) coordinates on the display, into a spherical coordinate system. With respect to FIG. 4, consider the image plane to be in the x-y plane, with the y-axis extending up and down on the page and the x-axis being perpendicular to the page. After the afocal lens system, the rays issued from one single field cannot be referenced by x or y since they spread, but they all have a unique direction which is different from one pixel to another. The lens converts pixel (x,y) coordinates to a spherical $(\theta,\Phi)$ pair. This means that for each ray's direction in the exit pupil (or in-coupler) we deal with another pixel.

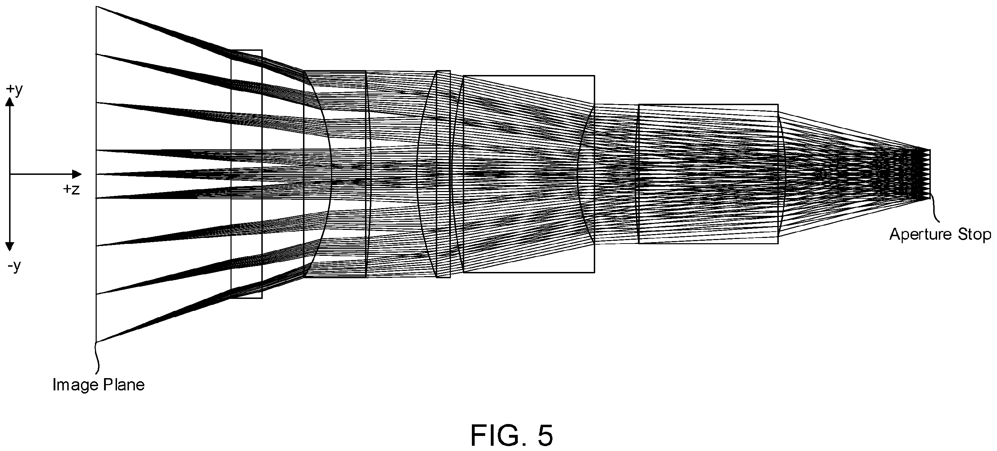

In the example of FIG. 5, the rays from fields with y>0 and the rays from fields with y<0 have angles with opposite sign at the exit pupil in a polar coordinate system. If we use a spherical coordinate system with the z-axis pointing along the optical axis, then the polar angles are always between 0 and pi (positive) and only the azimuthal direction sign will distinguish the rays hitting the exit pupil 'from above' or 'from below'. At each position along the exit pupil, we have positive as well as negative ray directions in a polar coordinate system.

When symmetric diffraction modes are used, the diffraction grating will diffract an incoming ray in the plus or minus order. In some cases, if the ray has one particular sign orientation, it will diffract in one mode, and if the sign changes, it will diffract into the opposite mode. To some extent, diffraction occurs in more than one mode at a time, but for a particular direction of incoming ray, the diffraction into a particular mode may have a stronger energy than in the mode of opposite sign. Symmetric here means that if a plus direction diffracts efficiently into the mode M, the minus direction will diffract efficiently into the -M direction. (M is a relative natural number).

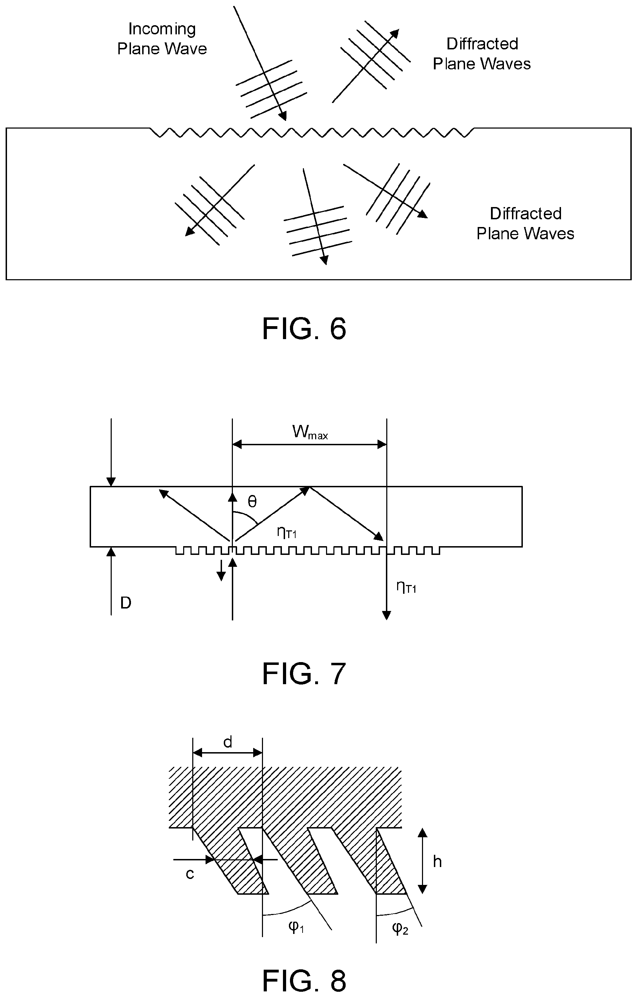

A symmetric diffraction grating generally permits the previous property of symmetric diffraction modes. This property may be effected with the use of a basic structure (elementary pitch) that has a left-right geometrical symmetry. Blazed and slanted grating are not symmetric diffraction gratings. Grating based on square shape steps (door shape) can be symmetric diffraction gratings. FIGs. 6 and 7 offer examples of symmetric diffraction gratings.

Example embodiments use symmetric diffraction gratings that can achieve symmetric diffraction modes of very high efficiency. For opposite signed angle of incidence, some embodiments provide +M or -M diffraction modes of high efficiency.

FIG. 8 illustrates a slanted grating which, when illuminated from above, will be efficient for rays tilted toward the left (negative angles in our case) and will have the best diffraction mode towards the right hand side. When illuminated from the right hand side (positive angle), the diffraction mode toward the left will be very weak.

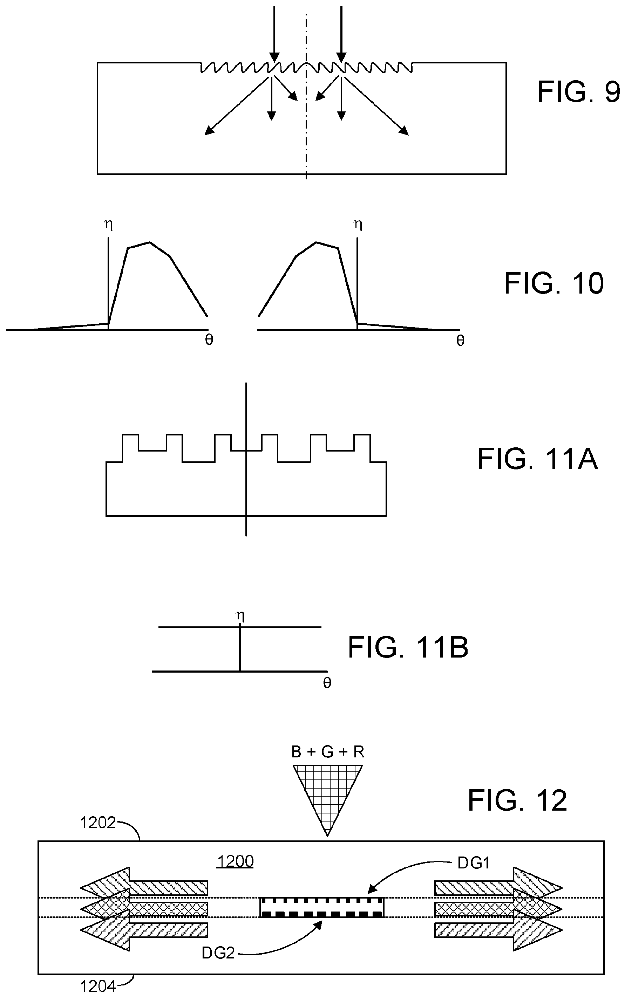

FIG. 9 illustrates use of symmetric diffraction with non-symmetrical gratings that employs two different diffraction gratings. The in-coupling grating in FIG. 9 has asymmetric groove profiles. The grating is split in two parts, each coupling mainly to one direction. In the system of FIG. 9, rays on the left-hand side will diffract with high efficiency toward the left, those on the right-hand side will diffract to the right, with high efficiency for a limited angular range. In addition to that process, a small part of the energy will also diffract into the opposite direction for the opposite diffraction mode.

In a grating as in FIG. 9, only rays hitting the right hand side grating with negative direction of propagation will efficiently diffract into the right hand side diffraction mode. Rays hitting the right hand side diffraction grating with positive angles of incidence will not substantially diffract into the right hand side diffraction mode (except with a low intensity). Only rays hitting the left hand side grating with positive direction of propagation will efficiently diffract into the left hand side diffraction mode. Rays hitting the left hand side diffraction grating with negative angles of incidence will diffract into the left hand side diffraction mode only with a low intensity. At each position of the exit pupil, there is an equal distribution of positive and negative angles of propagation, so approximately half of the light will be lost. FIG. 10 illustrates typical diffraction efficiencies for both gratings as a function of the angle of incidence.

In contrast, a diffraction grating with a profile as illustrated in FIG. 11A, which is used in some embodiments, provides for more even coupling of light across different angles of incidence, as is illustrated schematically in FIG. 11B.

Some example embodiments provide a single-waveguide full-color solution with a high FoV for in-coupling light into the optical device. Example embodiments also operate well at gathering of diffracted rays for different colors.

FIG. 12 is a schematic cross-sectional view of a waveguide 1200 according to the claimed invention with a metagrating in-coupler inside the waveguide according to some embodiments. The waveguide 1200 has a first surface 1202 and a second surface 1204 substantially opposite the first surface. A reflective diffractive in-coupler DG1 is provided in the waveguide between the first and second surfaces, and a transmissive diffractive in-coupler DG2 is provided in the waveguide between the reflective diffractive in-coupler DG1 and the second surface 1204. The reflective diffractive in-coupler DG1 and the transmissive diffractive in-coupler DG2 together operate as a metagrating.

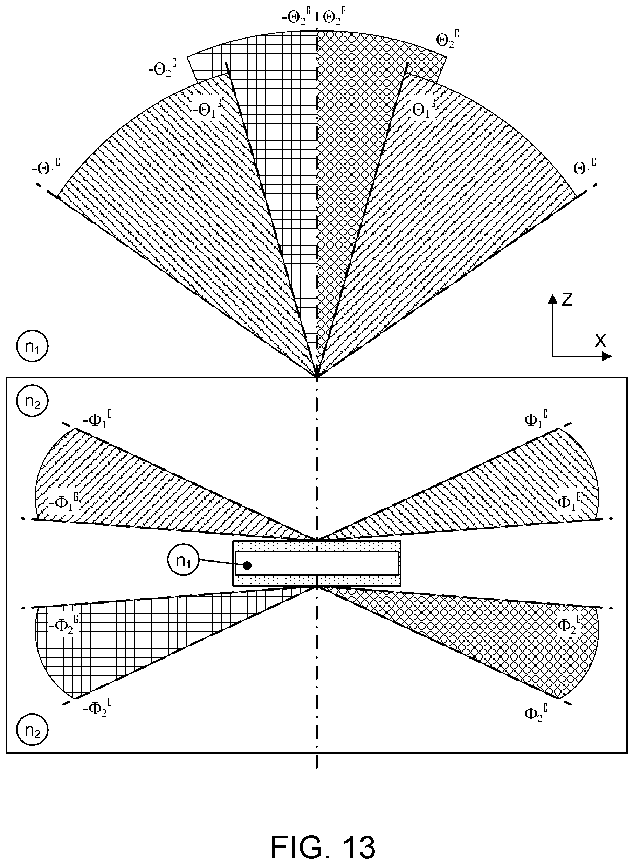

FIG. 13 is a schematic cross-sectional view of a single-waveguide in-coupling system according to some embodiments. FIG. 13 illustrates angles of incident and diffracted light for a case when incident light is in-coupled by reflective or transmissive diffraction grating representing a metagrating inside the waveguide. Angles whose name begins with letter $\Theta$ are located in the air. Angles whose name begins with $\Phi$ are located in the waveguides and measure the angle of rays that have been diffracted. C is a critical ray, either in air or in the waveguide, G is a grazing ray.

Example embodiments operate to diffract incident light using a metagrating and in-coupling it into the waveguide. The metagrating may include reflective and transmissive diffraction gratings with different periods. Appropriate combinations of diffraction gratings provides a high FoV for three colors.

FIG. 13 schematically illustrates the functionality of a metagrating according to some embodiments. The angular ranges $[\Theta^C_1; \Theta^G_1]$ and $[-\Theta^G_1; -\Theta^C_1]$ are diffracted according to a reflective diffractive mode inside the waveguide into the angular ranges $[\Phi^C_1; \Phi^G_1]$ and $[-\Phi^G_1; -\Phi^C_1]$ by the top reflective diffraction grating of an example metagrating composition.

The top reflective grating may have the following properties. Angles of the left-hand side of the image will propagate toward the right into the waveguide. The right-hand side of the image will propagate toward the left. The right-hand side of the image corresponds to the positive angles of incidence, which inside the waveguide will be mainly transferred into the negative reflected diffraction order. The left-hand side of the image corresponding to the negative angles of incidence will be transferred into the positive reflected diffraction order.

In a case of lower angular ranges $[\Theta^C_2; \Theta^G_2]$ and $[-\Theta^G_2; -\Theta^C_2]$ light will primarily go through the first diffraction grating and will be diffracted by the second transmitting diffraction grating which is from the bottom of an example metagrating composition. The corresponding angular ranges inside the waveguide are $[\Phi^C_2; \Phi^G_2]$ and $[-\Phi^G_2; -\Phi^C_2]$.

For the bottom diffraction grating, the positive angles of incidence propagate toward the right in the waveguide corresponding to the positive diffraction order, while negative angles of incidence propagate toward the left corresponding to the negative transmitted diffraction order.

Constitutive parts of metagrating are different diffraction gratings in that they have a different period selected for the proper wavelength, and they may have elements with different sizes and materials. In some embodiments, the geometrical structures of the diffraction gratings may have the same shape. This may be a shape that emphasizes edge-waves. Other embodiments may use elements of different shapes, providing an additional degree of freedom that may be used to improve the performance of the system.

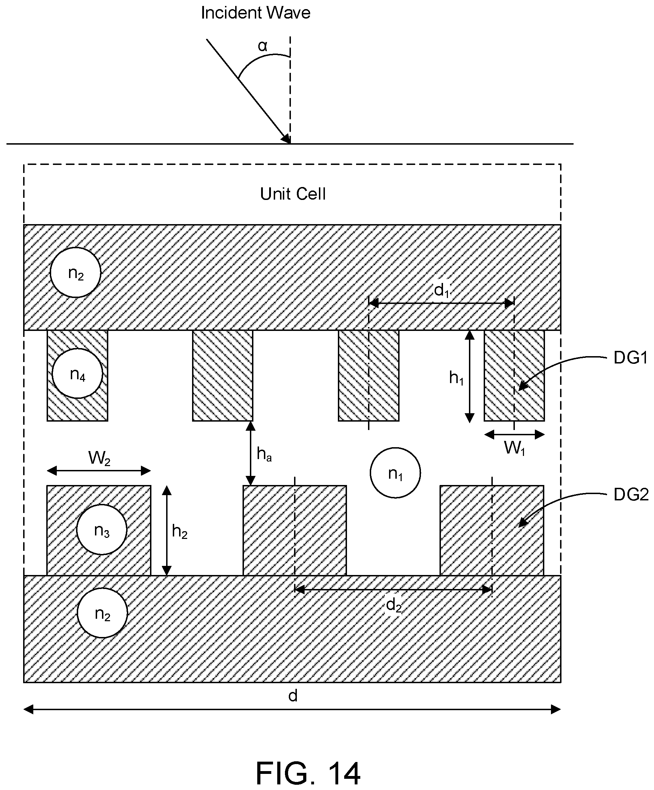

The general topology of an example unit cell of a metagrating is illustrated in FIG. 14. FIG. 14 is a cross-sectional view illustrating a unit cell of an example metagrating. This cross-sectional view may correspond to the high refractive index $(n_4)$ elements from the bottom of a homogeneous dielectric plate with a refractive index $n_2$ $(n_4 > n_2)$, $d_1$ is the period of this first grating, $w_1$ and $h_1$ are width and height of the high refractive index elements. The second part of proposed metagrating contains the high refractive index $(n_3)$ elements on the top of a homogeneous dielectric plate with a refractive index $n_2$ $(n_3 > n_2)$, $d_2$ is the period of the second grating, $w_2$ and $h_2$ are width and height of the high refractive index element.

The example unit cell of the diffraction metagrating combines two plates with first (DG1) and second (DG2) diffraction gratings. In the example, the distance between the plates/substrates is equal to $h_1 + h_2 + h_a$, where $h_a$ is the distance between the elements (see FIG. 14). This distance between the elements of two gratings and substrates may be empty or may be filled by a material with low refractive index $n_1$ $(n_1 < n_2)$. In some embodiments, this material may be air.

To estimate the effectiveness of the full system we simulate the metagrating with the unit cell comprising four elements with refractive index $n_4$ and three elements with refractive index $n_3$. In the example, the period of the metagrating is equal to $d = 4d_1 = 3d_2$. If the period of reflective diffraction grating is configured to in-couple diffraction order $M_1$ and the period of the transmissive diffraction grating is configured to in-couple diffraction order $M_2$, then the period of the new metagrating is configured to in-couple reflected order $M_1^* = 4M_1$ and transmitted order $M_2^* = 3M_2$. To modify the FoV of an example apparatus, the pitch of the metagrating may be modified, which may change the number of the elements in the unit cell for both diffraction gratings. The period of the metagrating may be selected using an assumption that the biggest angular span that can be coupled propagates into the waveguide by Total Internal Reflection (TIR). A linearly polarized plane wave is incident on the metagrating system from the top in a plane perpendicular to the metagrating. Example embodiments may be used for TE and TM polarizations. But to improve efficiency, the system may be configured taking into account the polarization of an incident wave.

In some embodiments, depending on the in-coupled wavelengths, the metagrating may have a unit cell comprising n elements with refractive index $n_4$ and m elements with refractive index $n_3$. In this case the period of the metagrating is equal to $d=nd_1=md_2$. If the period of the reflective diffraction grating is configured to in-couple diffraction order $M_1$ and the period of transmissive diffraction grating is configured to in-couple diffraction order $M_2$, then the period of the metagrating is configured to in-couple reflected order $M_1^*=nM_1$ and transmitted order $M_2^*=mM_2$.

The mutual positioning of the elements of two diffraction gratings in relation to one another inside the pitch does not substantially affect the system performance. So, in some embodiments, a precise alignment of diffraction gratings DG1 and DG2 is not required.

The materials and size of the constitutive parts may be selected in order to manage the position, direction, phase and amplitude of edge waves diffracted by the vertical edges of the high refractive index element. For the sake of illustration, the following description refers primarily to elements of diffraction gratings with vertical edges parallel to z-axis and top/bottom surfaces parallel to the xy-plane, which corresponds to the base angle equal to 90°. However, in other embodiments, different shapes such as prismatic structures (with arbitrary base angles) can also be used. Variation of the base angle value provides additional degree of freedom in the control of the edge wave radiation. The diffraction grating is formed of a periodic array of the unit cells.

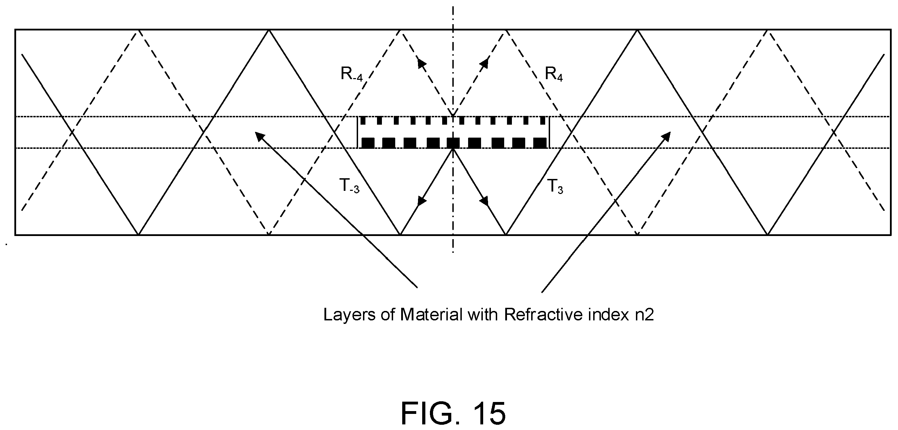

Selecting the reflective and transmissive parts of metagrating to in-couple fist diffraction orders ($M_1=M_2=1$) results in a metagrating in which the fourth reflected order $R_{\pm4}$ ($M_1^*=4$) and the third transmitted order $T_{\pm3}$ ($M_2^*=3$) will be in-coupled into the waveguide. This example considers a dual diffraction grating system where the pupil is split angularly. In some embodiments, the embedded metagrating may be used to couple the whole field of view into just one direction, toward the left or toward the right hand side. In that case, the basic geometries of the elements in the grating may advantageously be non-symmetric. The distribution of the diffracted light inside the waveguide is presented in FIG. 15.

FIG. 15 is a schematic cross-sectional view of an embodiment using a metagrating as described herein. In this example use of a metagrating, the fourth reflected order $R_{\pm4}$ ($M_1^*=4$) and third transmitted order $T_{\pm3}$ ($M_2^*=3$) will be in-coupled into the waveguide.

To provide the total reflection of the diffracted light only by the external (horizontal) walls of the waveguide, in some embodiments, thin layers of the thickness $h_1 + h_2 + h_a$ and with refractive index $n_2$ may be positioned between the plates with the diffraction gratings on both sides of the gratings. These layers may be adhered using a glue with substantially the same refractive index $n_2$ to prevent the reflection by the boundaries of these layers. To prevent undesirable diffraction of reflected $R_{\pm4}$ and transmitted $T_{\pm3}$ orders, the lateral size of the metagrating may be considered in the selection of the width of the plates as well as the thicknesses of the first and second plate, with reflection and transmission gratings.

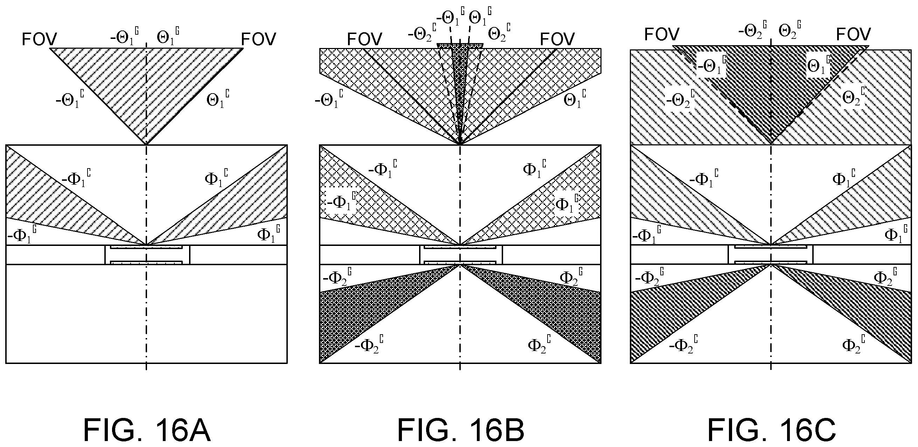

FIGs. 16A-16C are schematic illustrations of angles of light characteristic of a metagrating in a single-waveguide system. FIG. 16A illustrates angles of blue light. FIG. 16B illustrates angles of green light. FIG. 16C illustrates angles of red light.

Some embodiments may be implemented in a waveguide device that is configured to in-couple all three RGB colors. In such embodiments, parameters of the waveguide may be selected as follows.

For the first reflective diffraction grating DG1 (with the period $d_1$, top of metagrating composition), parameters may be selected such that the grating performs as follows. The period of reflective diffraction grating may be selected for blue color wavelength and for an angular range covering full FoV for the reflective diffraction grating ($2\Delta\theta_1$ for a dual-mode system), assuming that the incoming grazing rays are in the vicinity of the normal. The diffraction grating may be configured to get high diffraction efficiency of corresponding orders $M_1$ ($\pm2^{nd}$ or $\pm1^{st}$ depending on the topology) in the mentioned angular range at blue color wavelength. From FIG. 16A, corresponding to the blue color, the angular ranges [$\Theta^C_{1,blue}$; $\Theta^G_{1,blue}$] and [$-\Theta^G_{1,blue}$; $-\Theta^C_{1,blue}$] diffract inside of the waveguide into the angular ranges [$-\Phi^C_{1,blue}$; $-\Phi^G_{1,blue}$] and [$\Phi^G_{1,blue}$; $\Phi^C_{1,blue}$] respectively. The configuration of DG1 may result in $\Theta^C_{1,blue}\approx\Delta\theta_1$.

At a wavelength corresponding to the green color, there may be a shift of an angular distribution toward the higher angles of an incidence. As illustrated in FIG. 16B, at a green color wavelength, the angular ranges [$\Theta^C_{1,green}$; $\Theta^G_{1,green}$] and [$-\Theta^G_{1,green}$; $-\Theta^C_{1,green}$] diffract inside of the waveguide into the angular ranges [$-\Phi^C_{1,green}$; $-\Phi^G_{1,green}$] and [$\Phi^G_{1,green}$; $\Phi^C_{1,green}$] respectively. The angular range between [$-\Theta^G_{1,green}$; $\Theta^G_{1,green}$] transmits through the first diffraction grating DG1 with the period $d_1$ with a very high efficiency. This portion of an incident image will be diffracted by the second transmissive grating DG2. If for angular ranges above $|\pm\Theta^G_{1,green}|$ the transmittivity $T_0$ is also high, it also will be diffracted by the transmissive grating (corresponding range of diffracted angles depends on the parameters of transmissive grating and cannot be bigger than [$-\Theta^C_{2,green}$; $\Theta^C_{2,green}$]) and after, it can be combined with the portion of an image diffracted by the first reflective grating.

Similar functionality will be observed at the wavelength corresponding to the red color. Increasing the wavelength, there is an additional shift of an angular distribution toward the higher angles of an incidence. As illustrated in FIG. 16C, at a red color wavelength, the angular ranges [$\Theta^C_{1,red}$; $\Theta^G_{1,red}$] and [$-\Theta^G_{1,red}$; $-\Theta^C_{1,red}$] diffract inside of the waveguide into the angular ranges [$-\Phi^C_{1,red}$; $-\Phi^G_{1,red}$] and [$\Phi^G_{1,red}$; $\Phi^C_{1,red}$] respectively. As in a case of green color, the angular range between [$-\Phi^G_{1,red}$; $\Theta^G_{1,red}$] transmits through the reflective diffraction grating (it corresponds to the 0 transmitted order $T_0$)

with a very high efficiency. This portion of incident image will be also diffracted by transmissive grating DG2. If for angular ranges above $|\pm\Theta^G_{1,red}|$ the transmittivity $T_0$ is also high, it also can be diffracted by the transmissive grating (range of diffracted angles depends on the parameters of second grating DG2 and cannot be bigger than $[-\Theta^C_{2,red}; \Theta^C_{2,red}]$) and after it can be combined with the portion of image reflected by the first grating DG1.

For the second transmissive diffraction grating DG2 (with the period $d_2$, bottom of metagrating composition), the parameters may be selected such that the grating performs as follows.

The period of transmissive diffraction grating DG2 may be selected for a red color wavelength and an angular range covering full FoV for the transmissive diffraction grating ($2\Delta\theta_1$ for a dual-mode system). The selection may be made using the assumption that the grazing rays are in the vicinity of the normal. This diffraction grating may be configured to get high diffraction efficiency of corresponding orders $M_2$ ($\pm2^{nd}$ or $\pm1^{st}$ depending on the topology) in the mentioned angular range at red color wavelength. As illustrated in FIG. 16C corresponding to the red color, the angular ranges $[\Theta^C_{2,red}; \Theta^G_{2,red}]$ and $[-\Theta^G_{2,red}; -\Theta^C_{2,red}]$ diffract inside of the waveguide into the angular ranges $[\Phi^G_{2,red}; \Phi^C_{2,red}]$ and $[-\Phi^C_{2,red}; -\Phi^G_{2,red}]$. For the second grating, it may be observed that $\Theta^C_{2,red}\approx\Delta\theta_1$.

At a wavelength corresponding to the green color there may be observed a shift of an angular distribution toward the lower angles of an incidence leading to the angular overlapping of the corresponding positive/negative diffraction orders. The positive diffraction order may thus correspond to positive and some range of negative angles of incidence. The negative diffraction order will correspond to negative and some positive angles of incidence. There is a range of low angles for which there is a response for both diffraction orders (angular overlapping of the characteristics).

In some embodiments, the following diffraction equations may be used to select the pitch sizes $d_1$ and $d_2$ of the reflective and transmissive diffraction gratings take form:

$$n_{2B} \sin \Phi^C_{1,blue} - n_1 \sin \Theta^C_{1,blue} = \frac{M_1 \lambda_B}{d_1}$$

$$n_{2B} \sin \Phi^G_{1,blue} - n_1 \sin \Theta^G_{1,blue} = \frac{M_1 \lambda_B}{d_1}$$

$$n_{2R} \sin \Phi^C_{2,red} + n_1 \sin \Theta^C_{2,red} = \frac{M_2 \lambda_R}{d_2}$$

$$n_{2R} \sin \Phi^G_{2,red} + n_1 \sin \Theta^G_{2,red} = \frac{M_2 \lambda_R}{d_2} \qquad (1)$$

For some examples, it may be assumed that $n_1$=1. Some values are known, such as $\sin \Phi^C_{1,blue} = \frac{1}{n_{2B}}$, $\sin \Phi^C_{2,red} = \frac{1}{n_{2R}}$ wherein $n_{2B}$ and $n_{2R}$ are refractive indexes of the waveguide's material at the wavelengths of blue and red colors, $M_1$ and $M_2$ correspond respectively to the diffraction orders of the first and second diffraction gratings in a metagrating. According to some embodiments of the present disclosure, $\Phi^G_1$ and $\Phi^G_2$ are chosen to be approximately equal to 75°.

Specific values given herein are design parameters, and other values can be selected. The values chosen for $\Phi^G_1$ and $\Phi^G_2$ may be chosen according to the distance the image has to travel into the waveguide before being extracted, the number of TIR bounces, and the thickness of the waveguide.

The diffraction equations can be solved to select the periods of the diffraction gratings. Taking into account the corresponding signs for the angles and diffraction orders, in some embodiments, the parameters for the period of first reflective diffraction grating may be selected to satisfy the following equation:

$$d_1 = \frac{M_1 \lambda_B}{n_{2B} \sin \Phi^G_{1,blue} - n_1 \sin \Theta^G_{1,blue}} \qquad (2)$$

and the critical incident angle of the first grating may be represented as:

$$\sin \Theta^C_{1,blue} = 1 - \frac{M_1 \lambda_B}{d_1} \tag{3}$$

The pitch size $d_2$ of the second transmissive diffraction grating can be presented in the form:

$$d_2 = \frac{M_2 \lambda_R}{n_{2R} \sin \Phi^G_2 + n_1 \sin \Theta^G_{2,red}} \cdot \tag{4}$$

The critical incident angle of the second grating has the form:

$$\sin \Theta^C_{2,red} = -1 + \frac{M_2 \lambda_R}{d_2} \cdot \tag{5}$$

Those equations can be used to select the field of view of the system.

In an embodiment where the period of the metagrating is equal to $d=4d_1=3d_2$, it is possible to obtain the relationship between the angles $\Theta^G_{1,blue}$ and $\Theta^G_{2,red}$ :

$$\sin \Theta^G_{2,red} = \frac{1}{n_1} \left( \frac{3M_2 \lambda_R}{4M_1 \lambda_B} \left( n_{2B} \sin \Phi^G_1 - n_1 \sin \Theta^G_{1,blue} \right) - n_{2R} \sin \Phi^G_2 \right) \tag{6}$$

The next table (Table 1) shows some example parameters and the calculated values according to the previously solved set of equations for two diffraction gratings at three different wavelengths and $n_2$ corresponding to high index wafer. Taking into account the dispersion of the waveguide (WG) material (sapphire ($Al_2O_3$), for example), for three different colors, the following values of the refractive index may be used:

At $\lambda_B$=460nm (blue color) $n_{2B}$ =1.7783;
At $\lambda_G$=530nm (green color) $n_{2G}$ =1.7719;
At $\lambda_R$=625nm (red color) $n_{2R}$ =1.7666.

In Table 1, the parameters indicated with a dagger (†) are selected input parameters. Other parameters are calculated from those input parameters using the equations presented herein. Angles of incidence in a material of the waveguide are presented in the brackets.

To calculate the periods for diffraction gratings configured to in-couple first diffraction order ($M_{1,2}$=1), Eqs. (2) and (4) are used. In embodiments that use second orders $M_{1,2}$=2,4 the pitches of the gratings may be doubled.

Table 1. (d= 1082.191 nm, $M_1$*=4, $M_2$*=3, parameters indicated with a dagger (†) are input parameters; the remaining values are computed values based on described equations)

| | $\lambda$ =460nm | $\lambda$ = 530nm | $\lambda$ = 620nm |
|---|---|---|---|
| DG1 ($M_1$=-1) | $d_1 = \dfrac{d}{4} \approx 270.55\ nm$ | | |
| $\Theta^G_1$ | -1° (-0.56°) † | 14.33° (8.03°) | 35.82° (19.35°) |
| $\Phi^G_1$ | 75° † | 75° † | 75° † |
| $\Theta^C_1$ | 44.45° (23.19°) | 73.53° (32.77°) | >90° (46.98°) |
| DG2 ($M_2$=1) | $d_2 = \dfrac{d}{3} \approx 360.73\ nm$ | | |
| $\Theta^G_2$ | | -14.02° (-7.86°) | 0.707° (0.4°) † |
| $\Phi^G_2$ | | 75° † | 75° † |

(continued)

|  | $\lambda$ =460nm | $\lambda$ = 530nm | $\lambda$ = 620nm |
|---|---|---|---|
| $\Theta_2^C$ |  | 27.99° (15.36°) | 45.95° (24.01°) |

In the following discussion, it is assumed that the FoV is limited by the angular range $[-\Theta^C{}_1; \Theta^C{}_1]$ for blue color, where $\Theta^C{}_1$ =44.45°. Some angles are overlapped near normal incidence in symmetric diffraction directions to avoid the black bands for some colors, and the FoV of full RGB system in the example embodiment may be equal to 2x44.45=88.9° (corresponding to $2x\,\Theta_1^C$ for blue color). Such a system achieves a high field of view using just one waveguide. But if the index of refraction of the waveguide is increased, a higher field of view can be achieved for a full RGB system with a single waveguide.

FIGs. 16A-16C schematically depict the working principle of an example system for three colors. An example of possible values of the angles is presented in Table 1. As an input, the system receives an RGB image with three colors being superimposed. FIGs. 16A-16C show the three colors separately in order to emphasize the difference in behavior of each color. FIGs. 16A-16C illustrate the angular space for each color. For blue light (FIG. 16A), the coupled portion of light corresponds to the ±4th reflected orders. For green light (FIG. 16B) and red light (FIG. 16C), the portion of light coupled by this waveguide is illustrated corresponding to the ±4th reflected and ±3rd transmitted orders of the example metagrating system.

The FoV of whole system may be limited by the FoV obtained for blue color diffracted by DG1. As demonstrated above, the total FoV for such system is about $2\Delta\theta_1$, where $\Delta\theta_1$ is maximal theoretically possible FoV for the waveguide material.

A set of numerical simulations is presented below for an example metagrating (as in FIG. 14) with high refractive index configured to in-couple ±4th reflective diffraction orders and ±3rd transmissive diffraction orders for TE polarization.

The presented data were obtained using the COMSOL Multiphysics software. In the simulated example, aluminum arsenide (AlAs) is used as the material of the elements of reflective part of metagrating, silicon (Si) is used as the material of the transmissive part of the metagrating, and sapphire ($Al_2O_3$) is used as the material of the substrate. The presented numerical simulations take into account the dispersion of materials, and for three different colors, the following are the values of the refractive indexes for mentioned materials:

Table 2: Values of refractive indexes for 3 different colors.

|  | $\lambda$=460nm | $\lambda$=530nm | $\lambda$=620nm |
|---|---|---|---|
| Sapphire ($Al_2O_3$) | 1.7783 | 1.7719 | 1.7666 |
| $TiO_2$ | 2.7878 | 2.6702 | 2.5915 |
| AlAs | 3.4739+i0.14210 | 3.2735+i0.0042277 | 3.1396+i0.0011544 |
| Si | 4.5766+i0.12819 | 4.1602+i0.052853 | 3.9058+i0.021982 |

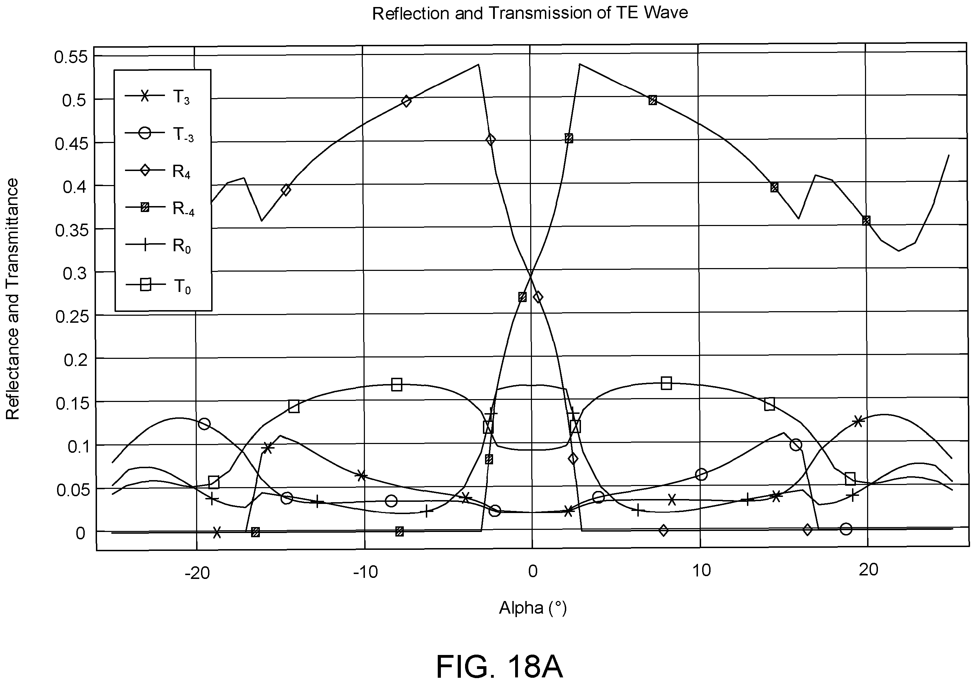

Results of numerical simulations for AlAs/Si metagrating configured for TE polarization are presented in FIGs. 18A-18C. The simulations assume that $n_1$ is the refractive index of host medium and $n_1$ =1 (air). The simulations are of an example full RGB metagrating system with FoV=88.9°.

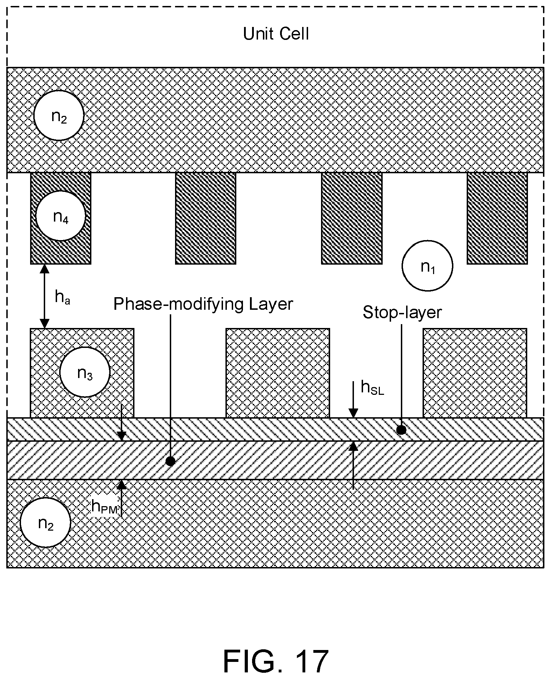

FIG. 17 is a cross-sectional view illustrating a unit cell of an example metagrating with additional phase modifying layer and stop layer.

The first reflective grating DG1 is configured for the blue color to couple ±4th orders reflected by the full metagrating system. DG1 has a period $d_1$ (see Table1) and AlAs elements with $w_1$ = 100nm; $h_1$ = 240nm.

The second transmissive grating DG2 is configured for the red color. DG1 has a period $d_2$ (see Table 1) and the following parameters of the Si elements: $w_2$ = 80nm; $h_2$ = 100nm. This grating converts the portion of the red light transmitted by the first diffraction grating (0 transmitted order, $T_0$) into the ±3rd diffracted orders transmitted by full metagrating system which will be coupled by the waveguide. To increase the diffraction uniformity for the light transmitted through the metagrating, example embodiments use a phase-modifying layer and stop layer below the elements of second diffraction grating (see FIG. 17). The high refractive index phase modifying layer will be placed on the top of substrate with refractive index $n_2$. The refractive index of this phase modifying layer is $n_{pm}$, and $n_{pm} > n_2$ in some embodiments. To simplify the fabrication process and control the depth of an etching process, a stop layer with refractive index $n_{sl}$ may be placed between the elements with high refractive index and phase-modifying layer. For the simulation presented in FIGs. 18A-18C, $TiO_2$ has been used as the material of phase-modifying layer and $Al_2O_3$ has been used as the stop-layer material. In the example, $h_{pm}$= $h_{si}$=10nm. The two added layers may improve the performance of the system. Some embodiments include these layers. Other embodiments do not. Different embodiments may have a different number of layers on the bottom and/or on the top grating for the purpose of improving the diffraction efficiency, the diffraction, uniformity or the total light throughput of the system.

In the simulated embodiment, the distance between the elements of gratings $h_a$ was equal to 250nm and was filled by air.

The angle range (alpha) presented in FIGs. 18A-18C corresponds to the incidence from the medium with refractive index $n_2$. Using Snell's law, it is possible to calculate the range corresponding to the medium $n_1$.

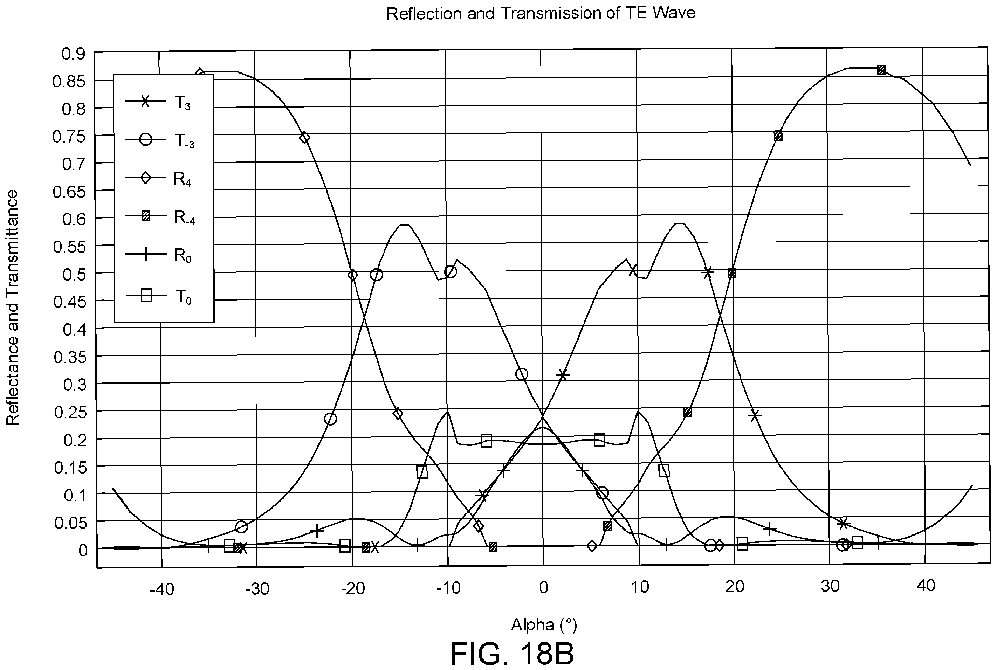

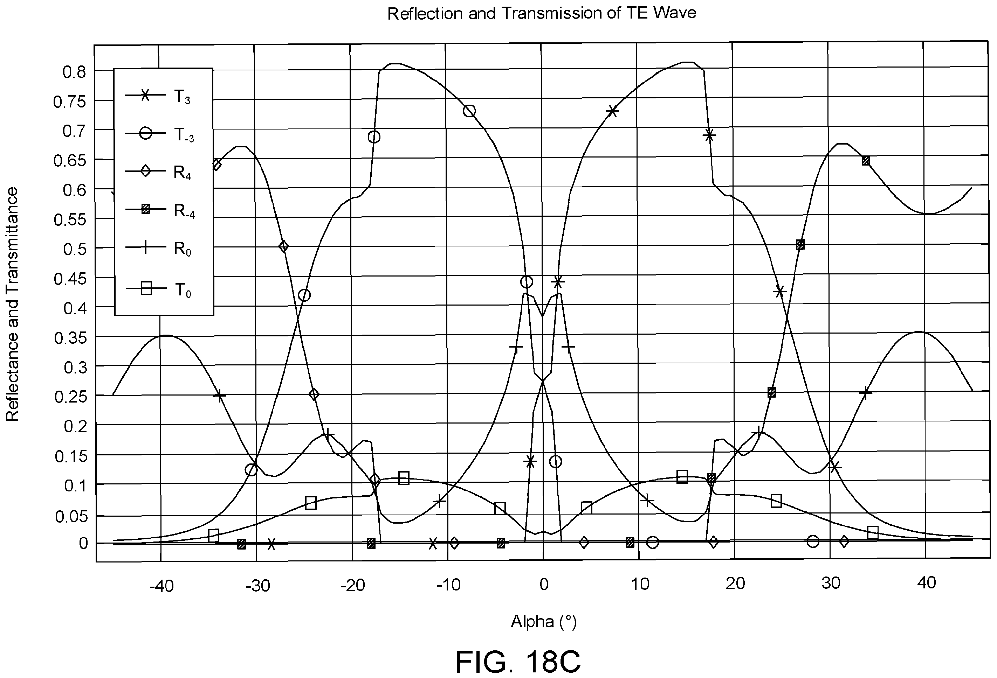

FIGs. 18A-18C illustrate diffraction performance of an example AlAs/Si metagrating using the unit cell as depicted in FIG. 17 with the following parameters: $w_1$ = 100nm, $h_1$ = 240nm, $w_2$ = 80nm; $h_2$ = 100nm, $h_{pm}$= $h_{si}$=10nm, $h_a$=250nm. Sapphire is the material of a waveguide. The angle ranges in-coupled by the system are shaded. The angle range (alpha) corresponds to the incidence from the medium with refractive index $n_2$. FIG. 18A illustrates diffraction performance for blue light ($\lambda$=460nm). FIG. 18B illustrates diffraction performance for green light ($\lambda$=530nm). FIG. 18C illustrates diffraction performance for red light ($\lambda$=620nm).

Simulations of example embodiments indicate potential ranges for values of $h_{pm}$ and $h_a$. Simulations were performed to determine the transmissivity of -3$^{rd}$ order for an AlAs/Si metagrating (with a unit cell as depicted in FIG. 17). Simulations were performed for embodiments with $h_{pm}$ in the range of about 10nm to 60nm and with $h_a$ in the range of about 25nm to 400nm. With $\lambda$=530nm and $\alpha$=2°, the transmittance is at its peak with $h_a$ in the range of about 200nm to 250nm and with $h_{pm}$ in the range of about 20nm to 45nm. With $\lambda$=530nm and $\alpha$=20°, transmittance is at its peak with $h_a$ in the range of about 250nm to 350nm and with $h_{pm}$ under about 30nm. With $\lambda$=620nm and $\alpha$=2°, transmittance is at its peak with $h_a$ in the range of about 100nm to 250nm and with $h_{pm}$ under about 35nm. With $\lambda$=620nm and $\alpha$=20°, transmittance is at its peak with $h_a$ in the range of about 200nm to 350nm and with $h_{pm}$ under about 60nm.

The distance between the elements of diffraction gratings DG1 and DG2 (or distance between the plates with diffraction gratings) may affect the performance of the system due to modification of the phase of the light transmitted through the first reflective grating DG1. To achieve high uniformity, it is desirable to select appropriate parameters for the thickness of additional layers and for the distance between the gratings $h_a$.

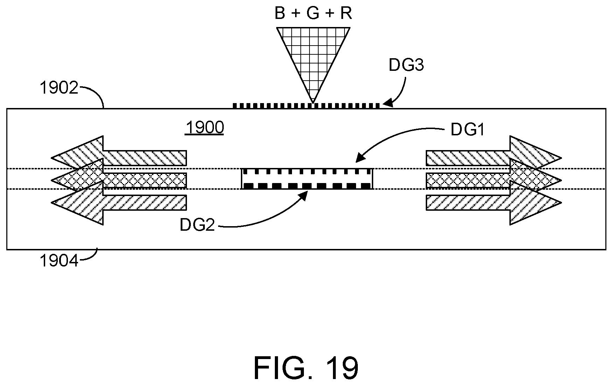

In some embodiments, to increase the FoV of an example waveguide display, a third diffraction grating DG3 is provided on the top of waveguide, as shown in FIG. 19.

FIG. 19 is a schematic cross-sectional side view of a high FoV full RGB waveguide display system with metagrating inside the waveguide and an additional grating on an outer surface of the waveguide. The waveguide 1900 has a first surface 1902 and a second surface 1904 substantially opposite the first surface. A reflective diffractive in-coupler DG1 is provided in the waveguide between the first and second surfaces, and a transmissive diffractive in-coupler DG2 is provided in the waveguide between the reflective diffractive in-coupler DG1 and the second surface 1904. The reflective diffractive in-coupler DG1 and the transmissive diffractive in-coupler DG2 together operate as a metagrating. In the example of FIG. 19, a second transmissive diffractive in-coupler DG3 is provided on the first surface 1902 of the waveguide.

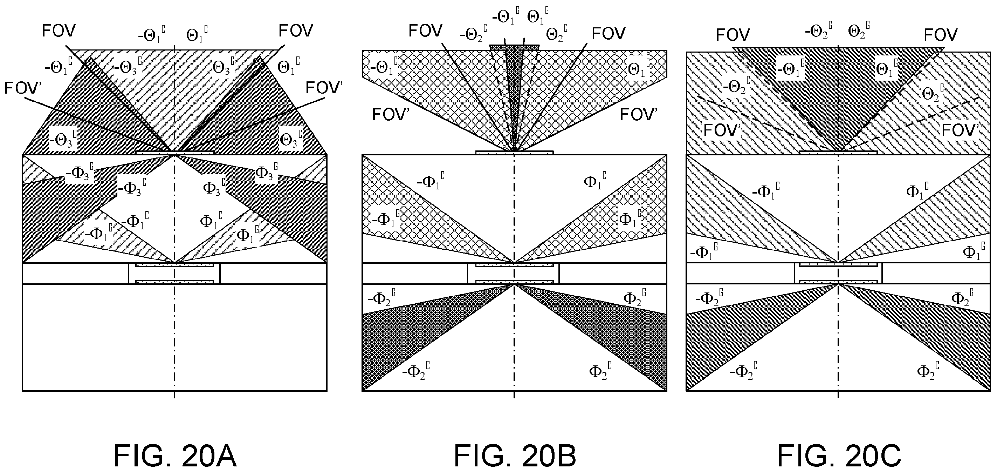

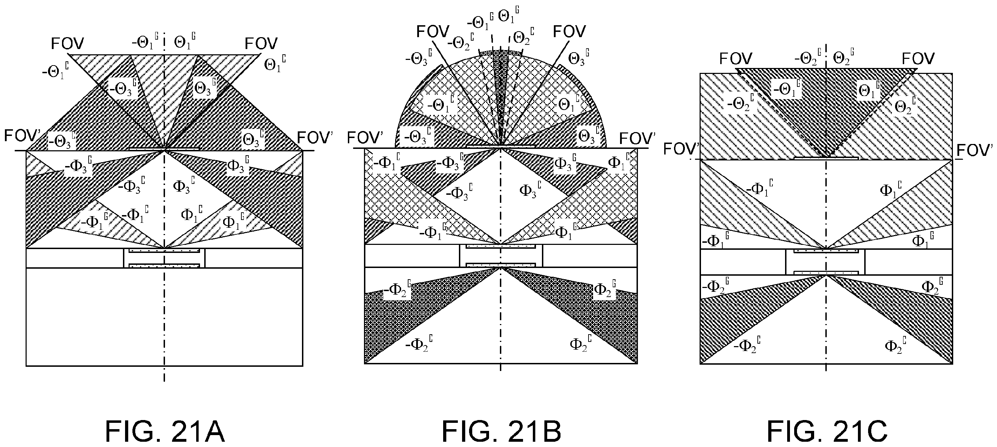

FIGs. 20A-20C and 21A-21C are schematic cross sectional views of a full RGB waveguide display system with a metagrating inside the waveguide and an additional grating DG3 on an outer surface of the waveguide, illustrating angles of incident and diffracted light for different wavelengths. In some embodiments, it is blue light that limits the FoV. The grating DG3 may thus be configured to couple higher angles of incident blue light. FIGs. 20A-20C and 21A-21C represent two different embodiments using a third diffraction grating DG3 to in-couple very high angles of incidence.

In an example embodiment, the period of transmissive diffraction grating DG3 is configured for a wavelength of blue light and an angular range covering [$\Theta^C_{3,blue}$; $\Theta^G_{3,blue}$] and [-$\Theta^G_{3,blue}$; -$\Theta^C_{3,blue}$], where angle $\Theta^G_{3,blue}$ will be chosen differently to modify the FoV and to increase the in-coupled light intensity of proposed system. The diffraction grating may be configured to get high diffraction efficiency of corresponding orders M$_3$ ($\pm$2$^{nd}$ or $\pm$1$^{st}$ depending on the topology) in the mentioned angular range at blue color wavelength. The angular ranges [$\Theta^C_{3,blue}$; $\Theta^G_{3,blue}$] and [-$\Theta^G_{3,blue}$; -$\Theta^C_{3,blue}$] diffract inside of the waveguide into the angular ranges [$\Theta^G_{3,blue}$; $\Phi^C_{3,blue}$] and [-$\Phi^C_{3,blue}$; -$\Theta^G_{3,blue}$]. The angular range [-$\Theta^G_{3,blue}$; $\Theta^G_{3,blue}$] transmits through the DG3 with very high efficiency of transmitted order T$_0$. Into the waveguide, the left hand side of the image will propagate toward the left into the waveguide while the right hand side of the image will propagate toward the right. The following two diffraction equations may be used to select the pitch size $d_3$ of transmissive diffraction grating DG3:

$$n_{2B} \sin \Phi^C_{3,blue} + n_1 \sin \Theta^C_{3,blue} = \frac{M_3 \lambda_B}{d_3} \tag{7}$$

$$n_{2B} \sin \Phi^G_3 + n_1 \sin \Theta^G_{3,blue} = \frac{M_3 \lambda_B}{d_3}.$$

The parameters in some embodiments are selected using the assumption that $n_1=1$ (air is a hosting material). Some values are known, for example, $\sin \Phi^C_{3,blue} = \frac{1}{n_{2B}}$ , and $M_3$ corresponds to the diffraction order of the third diffraction grating. According to an embodiment of the present disclosure, $\Phi^G_3$ is chosen to approximately equal to 75°. Then we get

$$d_3 = \frac{M_3 \lambda_B}{n_{2B} \sin \Phi^G_1 + n_1 \sin \Theta^G_{3,blue}} . \qquad (8)$$

In some embodiments parameters are selected to perform as shown in the schematic depictions of FIGs. 21A-21C. Under the assumption that $\pm\Theta^G_{3,blu} \approx \pm\Theta^C_{1,blue}$, the FoV of the total system may be increased up to FoV', which by be limited by the angular range $[-\Theta^C_{1,green}; \Theta^C_{1,green}]$ for green light. For example, for the system considered in Table 1 at $\Theta^G_{3,blue} \approx \Theta^C_{1,blue} \approx 44°$ we get $d_3 = 190.68$nm and $\Theta^C_{3,blue} > 90°$. As a result, the FoV' of full RGB system will be equal to 2x73.53=147.06° (this value corresponds to $2x\,\Theta^C_1$ for green color, $\Theta^C_{1,green} = 73.53°$). As the result, high angles of incidence (above $\Theta^C_1$ for blue color) will be in-coupled by DG3 ($T_{\pm 1}$ if $M_3 = 1$) and low angles of incidence (up to $\Theta^C_1$ for blue color) will be reflected ($R_{\pm 4}$) by the metagrating. High angles of incidence for green and red colors (up to $\Theta^C_1$ for green color) will be reflected by the metagrating, low angles of incidence for green and red colors will transmit through the metagrating ($T_{\pm 3}$).

In some embodiments parameters are selected to perform as shown in the schematic depictions of FIGs. 21A-21C. In the example of FIGs. 21A-21C, some green light is diffracted at the top diffraction grating adding some higher angles of incidence for the green wavelength which may otherwise limit the FoV. Such embodiments may be particularly useful with a waveguide made of a low refractive index material. The example of FIGs. 21A-21C may help to increase the uniformity of in-coupled light. In some embodiments $|\Theta^G_{3,blue}| < |\Theta^C_{1,blue}|$. Choosing a value for $\Theta^G_{3,blue}$ the angular shift for the $\Theta^G_{3,green}$ at the wavelength corresponding to the green color is taken into consideration. So, for some embodiments, $|\Theta^G_{3,green}| < |\Theta^C_{1,green}|$. The FoV of the total system is increased up to FoV', which may be limited by the angular range $[-\Theta^C_{3,blue}; \Theta^C_{3,blue}]$ for blue light. For example, for the system considered in Table 1 at $\Theta^G_{3,blue} = 27°$ an embodiment may use the parameters shown in Table 3.

Table 3. Values indicated with a dagger (†) are input parameters; other values are computed values based on the described equations.

| | $\lambda$ =460nm | $\lambda$ = 530nm | $\lambda$ = 620nm |
|---|---|---|---|
| DG3 ($M_3$=1) | $d_3$ = 211.82 *nm* | | |
| $\Theta^G_3$ | 27° (14.8°) † | 52.25° (26.5°) | |
| $\Phi^G_3$ | 75° † | 75° † | |
| $\Theta^C_3$ | >90° (41.215°) | >90° (57.97°) | |

In this example, the FoV' of full RGB system will be equal to 2x90=180° (this value corresponds to $2x\,\Theta^C_3$ for blue color, $\Theta^C_{3,blue} > 90°$). As the result, for blue light, high angles of incidence will be in-coupled by DG3 ($T_{\pm 1}$ if $M_3 = 1$) and low angles of incidence will be reflected ($R_{\pm 4}$) by the metagrating. High angles of incidence for green color will be partially in-coupled by DG3 ($T_{\pm 1}$ if $M_3 = 1$) and partially will be reflected by the metagrating ($R_{\pm 4}$), low angles of incidence for green and red colors will transmit through the metagrating ($T_{\pm 3}$). For red color high angles of incidence will be reflected by the metagrating ($R_{\pm 4}$) and low angles of incidence will be transmitted by metagrating ($T_{\pm 3}$).

In the example of Table 3, the angle $\Theta^G_{3,blue} = 27°$ was chosen to increase the intensity of in-coupled blue color (see FIG. 18A for blue light, where the intensity of the fourth reflected order decreases up to 35% at $\alpha$=16° in a material of the waveguide and $\alpha$=29.35° in a material with $n_1$=1).

FIGs. 20A-20C are schematic illustrations of a single waveguide system with high FoV for three different colors. FIG. 20A illustrates angles of incident and diffracted blue light. FIG. 20B illustrates angles of incident and diffracted green light. FIG. 20C illustrates angles of incident and diffracted red light. Those diagrams are merely schematic, and in example embodiments there is no separation between the top and bottom waveguides. For example, they may be glued together or otherwise laminated. Moreover, blue light is not limited to propagate in the top waveguide. Whatever the wavelength, once light gets into its propagation direction (left or right), it can bounce by total internal reflection (TIR) on the top surface of the top waveguide and on the bottom surface of the bottom waveguide.

FIGs. 21A-21C are schematic illustrations of a single waveguide system with high FoV for three different colors. FIG. 21A illustrates angles of incident and diffracted blue light. FIG. 21B illustrates angles of incident and diffracted green light. FIG. 21C illustrates angles of incident and diffracted red light.

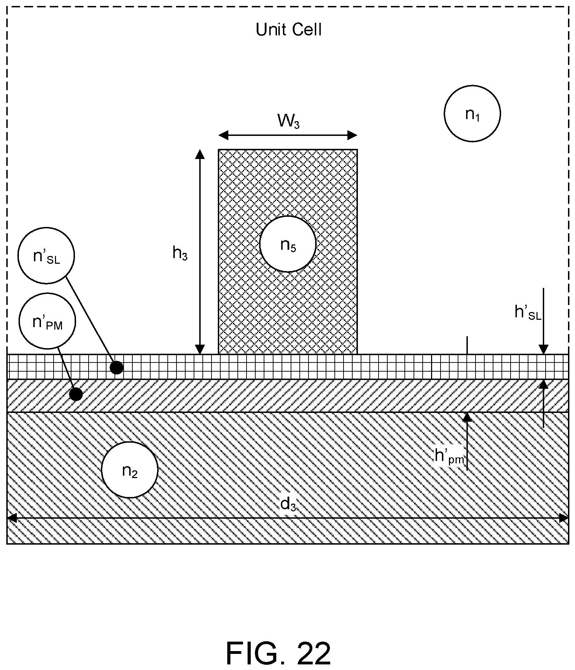

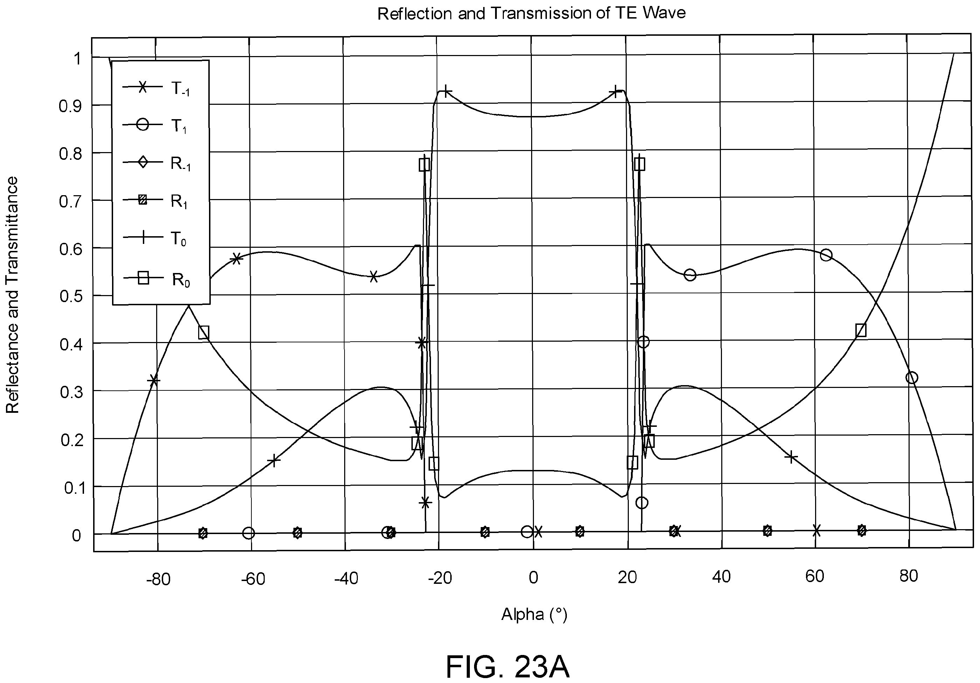

FIGs. 23A-23C illustrate results of numerical simulations for an embodiment using a transmissive diffraction grating with a stop layer and a phase modifying layer configured to generate intensive $\pm$1st diffraction orders for TE polarization. A cross section of an example unit cell of this grating is depicted in FIG. 22.

The grating simulated in FIGs. 23A-23C corresponds to the waveguide embodiment represented in FIGs. 21A-21C. The example grating has a period $d_3$ =211.82 nm (see Table 3) and the following parameters of the $TiO_2$ elements: $w_3$ = 40nm; $h_3$ = 70nm. It converts the portion of the blue and green light into the $\pm$1st transmitted orders ($T_{\pm 1}$) which will be coupled by the waveguide. Low angles of incidence for green and blue colors and full range of the incident angles for red color will be transmitted through this grating with very high efficiency of transmitted order $T_0$. To increase the diffraction uniformity for the diffracted and transmitted light, example embodiments include additional layers below the elements of the third diffraction grating, as shown in FIG. 22). A high refractive index phase modifying layer is provided on the top of the substrate with refractive index $n_2$. In this example, the refractive index of this phase modifying layer is $n'_{pm}$ , and $n'_{pm} > n_2$ . In some embodiments, to simplify the fabrication process and control the depth of an etching process, an additional stop layer with refractive index $n'_{sl}$ is provided between the elements of the diffraction grating and the phase-modifying layer. For the simulated embodiment presented in FIG. 22, $TiO_2$ is used as the material of phase-modifying layer and $Al_2O_3$ is used as the stop-layer material. In the simulated embodiment, $h'_{pm} = h'_{sl} = 10$nm.

FIG. 22 is a schematic cross-sectional view of a unit cell of a diffraction grating with additional layers.

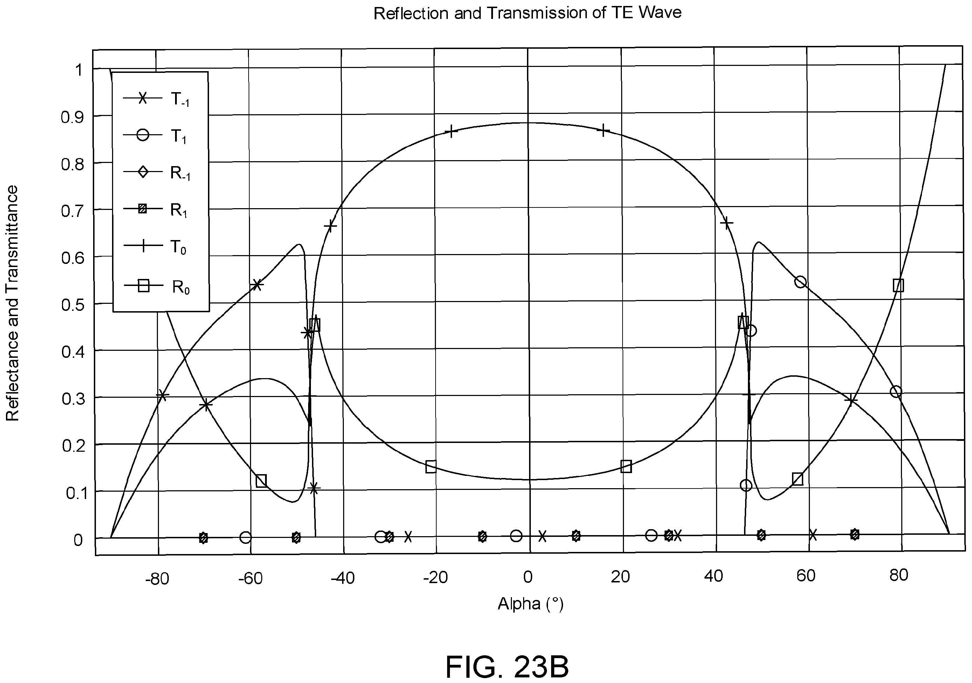

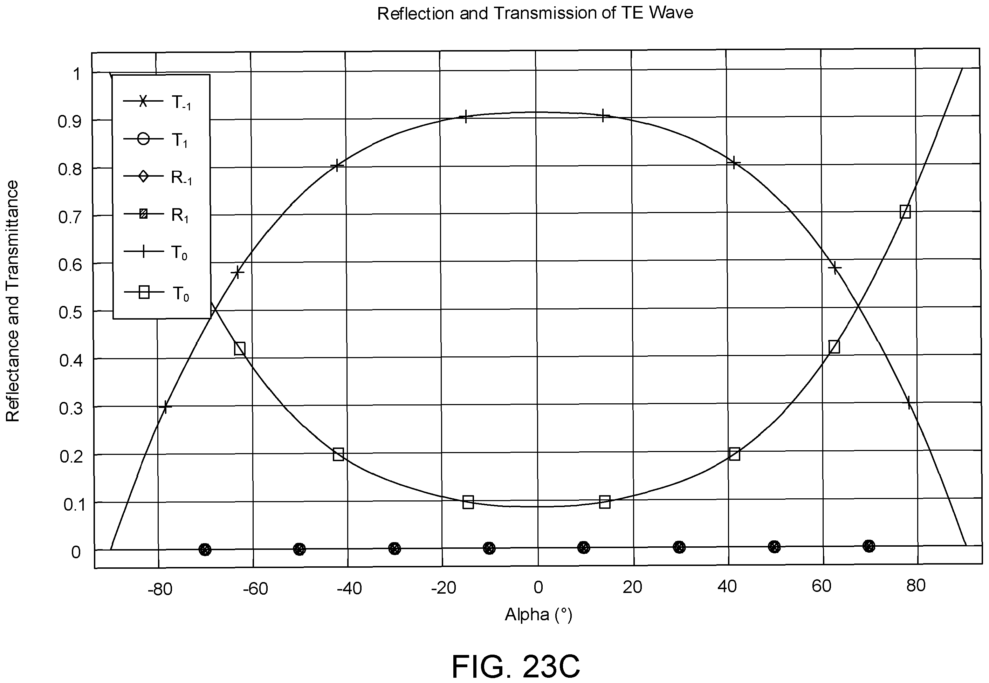

FIGs. 23A-23C illustrate results of simulating the diffraction performance of DG3 configured using unit cells as depicted in FIG. 22. In the simulated embodiment, $w_3$ = 40nm, $h_3$ = 70nm, $h'_{pm} = h'_{sl} = 10$nm. Sapphire is the material of a waveguide. The angle ranges in-coupled by the system are shaded. The angle range (alpha) corresponds to the incidence from the host medium with refractive index $n_1$. FIG. 23A illustrates diffraction performance for blue light ($\lambda$=460nm). FIG. 23B illustrates diffraction performance for green light ($\lambda$=530nm). FIG. 23C illustrates diffraction performance for red light ($\lambda$=620nm).

As the metagrating will diffract the light transmitted through DG3, a low intensity of $T_0$ for very high angles of incidence for red color could act as an effective limit on the total FoV of the full RGB system. However, a full 180° field of view is more than enough to cover the total human field of view where stereopsis is effective for human vision, which is around 114°.

The lateral sizes of DG3 relative to the metagrating may be selected such that DG3 does not interfere with the portion of light reflected by the metagrating. This size may be selected as a function of the waveguide's thickness. The thickness and length of the waveguide may also be selected such that the portion of light in-coupled by DG3 can reach an appropriate out-coupling component of the waveguide.

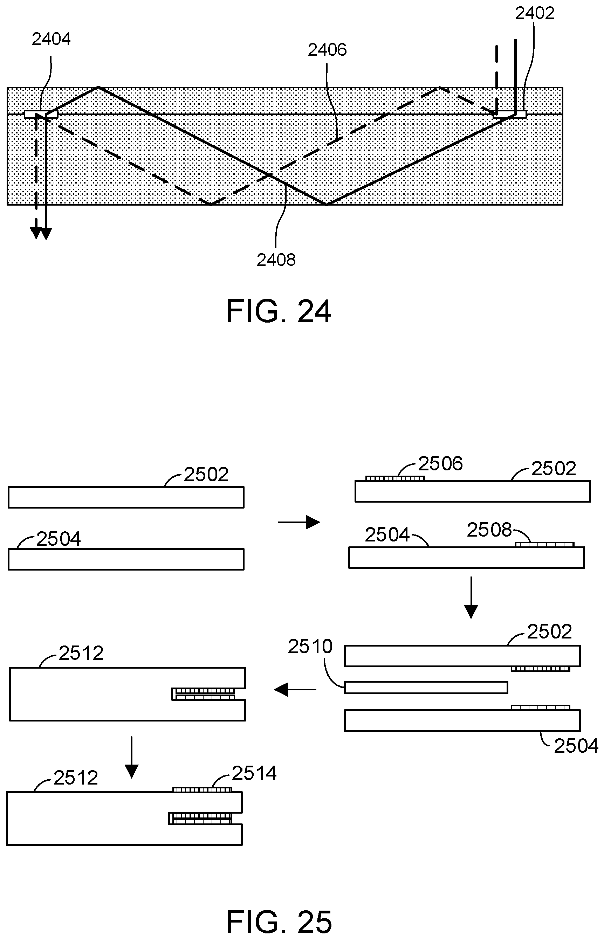

FIG. 24 is a schematic cross-sectional view of a waveguide including an in-coupler metagrating 2402 and an out-coupler metagrating 2404. FIG. 2404 further illustrates an example path of blue light 2406 and red light 2408 through the waveguide.

As illustrated in FIG. 24, the layers of the waveguide may have thicknesses that are different from one another. For waveguide layers of different thickness, the difference in the path length for the reflected and transmitted rays will be compensated at the extraction by the out-coupler.

In some embodiments, as is further illustrated in FIG. 24, the out-coupler metagrating may be similar to or the same as the in-coupler. In some embodiments, the outcoupler may be reversed top-down to reflect blue and transmit red light. Such an outcoupler may also reflect and transmit green. In some embodiments, the out-coupler may also extract the image in the same half space (up). In that case, the out-coupler may have the same orientation as the incoupler.

In the example of FIG. 24, there is a small difference in the light path between the red and blue light. The red path is a little bit longer than the blue one, at least by two times $h_a$ because it is transmitted once through that distance at the incoupler and then at the outcoupler, while blue is not. This makes a light path difference for both colors of about 500nm. Some pixel shifts may occur between the blue and red images. Such shifts may be compensated electronically by calibrating and registering both images. Green light will have the same effect and in addition to that, as half of the image is reflected and the other half transmitted, it may also benefit from a left-right registration of the image at the display side.

An example manufacturing method according to some embodiments is illustrated in FIG. 25. Waveguide substrate layers 2502 and 2504 are provided. A reflective diffraction grating 2506 is deposited, etched, or otherwise formed on the surface of waveguide substrate 2502. A transmissive diffraction grating 2508 is deposited, etched, or otherwise formed on the surface of waveguide substrate 2504. The substrate layers 2502 and 2504 are transparently laminated, glued, joined or otherwise combined together in a grating-to-grating orientation. A transparent spacer layer 2510 may be provided between layers 2502 and 2504 to keep the desired spacing between the gratings 2502 and 2504. In some embodiments, one or more of the gratings 2506 and 2508 may be etched or otherwise formed in a recess in its respective substrate layer, and the transparent spacing layer 2510 may be omitted. The combination of layers 2502, 2504, and (optionally) 2510 operates as a single combined waveguide, allowing in-coupled light to be reflected by total internal reflection between the top and bottom surfaces without substantial loss at the interfaces between the original layers. In some embodiments, this is accomplished by using substrate layers with refractive indices that are substantially the same, which may be accomplished by using substrate layers of the same material, and by avoiding air gaps or other large transitions in refractive index between the layers.

In some embodiments, a second transmissive diffraction grating 2514 is deposited, etched, or otherwise formed on the surface of waveguide 2512. In some embodiments, the formation of the second transmissive diffraction grating 2514 is performed on substrate layer 2502 before lamination of the layers. While FIG. 25 illustrates the formation of a single set of two to three gratings, the same or similar techniques may be used to create multiple sets of gratings in the same waveguide, such as a first set of gratings for use as an in-coupler, a second set of gratings for use as an out-coupler, and one or more gratings for use as exit pupil expanders. The manufacturing process of FIG. 25 may further include the addition of stop layers and/or phase modifying layers according to embodiments described herein. The properties and configurations of the combined waveguide and the diffraction gratings formed using the process of FIG. 25 may include the properties and configurations of any of the embodiments described herein.

Example embodiments may provide a very high FoV with the use of a single waveguide. To do this, example embodiments use a metagrating system inside the waveguide that operates to combine the beams diffracted by the reflective grating on the top of metagrating system and transmissive diffraction gratings from the bottom of the system. Some embodiments include an additional transmissive diffraction grating on an outer surface of the waveguide. Such embodiments may increase the field of view of the waveguide. The index of refraction of the waveguide may be selected to further increase the field of view for a full RGB system with single waveguide.

According to the claimed invention, some embodiments provide a one-waveguide system with a metagrating inside the waveguide. In such embodiments, one transmissive and one reflective diffraction grating are provided inside the waveguide. The reflective grating may be configured to in-couple blue light. The transmissive grating may be configured to in-couple red light. Some such embodiments allow for relatively simple fabrication. Such embodiments further protect the gratings against physical harm, such as abrasion. The incoupler diffraction gratings may be compatible with any light engine or other image source such as digital light processing (DLP) or liquid crystal on silicon (LCOS).

While the structures are primarily described herein for use with waveguide displays, applications of the structures described herein are not limited to visible light applications. With appropriate changes to the dimensions of grating elements and their spacing, embodiments may be used for electromagnetic wavelengths that are longer or shorter than those of visible light.

Some embodiments provide a one-waveguide system with a metagrating inside the waveguide and a transmissive grating on the top of the waveguide. Such embodiments may provide a transmissive grating on the top of the waveguide and a metagrating inside the waveguide. The transmissive grating may be configured to in-couple high angles of incidence for blue light.

In the present disclosure, modifiers such as "first," "second," "third," and the like are sometimes used to distinguish different features. These modifiers are not meant to imply any particular order of operation or arrangement of components. Moreover, the terms "first," "second," "third," and the like may have different meanings in different embodiments. For example, a component that is the "first" component in one embodiment may be the "second" component in a different embodiment.

Although features and elements are described above in particular combinations, one of ordinary skill in the art will appreciate that each feature or element can be used alone or in any combination with the other features and elements.

**Claims**

1. An optical system comprising:

   a waveguide (1200,1900) having a first surface (1202, 1902) and a second surface (1204, 1904) substantially opposite the first surface a reflective diffractive in-coupler (DG1) in the waveguide between the first and second surfaces; and
   a first transmissive diffractive in-coupler (DG2) in the waveguide between the reflective diffractive in-coupler and the second surface, wherein a spacing between the reflective diffractive in-coupler and the first transmissive diffractive in-coupler is no greater than 400nm.

**2.** The optical system of claim 1, wherein the reflective diffractive in-coupler has a grating period selected to couple blue light into the waveguide, and wherein the transmissive diffractive in-coupler has a grating period selected to couple red light into the waveguide.

**3.** The optical system of claim 1 or 2, wherein the spacing between the reflective diffractive in-coupler and the transmissive diffractive in-coupler is in the range of 200nm to 350nm.

**4.** The optical system of any one of claims 1-3, further comprising a second transmissive diffractive in-coupler on the first surface of the waveguide.

**5.** The optical system of claim 4, wherein the second transmissive diffractive in-coupler has a grating period selected to couple blue light into the waveguide.

**6.** The optical system of claim 4 or 5, wherein the reflective diffractive in-coupler has a grating period $d_1$ and is configured to in-couple light using diffractive order $M_1$, the second transmissive diffractive in-coupler has a grating period $d_3$ and is configured to in-couple light using diffractive order $M_3$, and wherein $\dfrac{d_3}{M_3} \leqslant \dfrac{d_1}{M_1}$ .

**7.** The optical system of any one of claims 1-6, further comprising an image generator (102,176) operative to provide an image at an input region including the reflective diffractive in-coupler and the first transmissive diffractive in-coupler.

**8.** The optical system of claim 7, wherein the optical system is configured to substantially replicate the image at at least one output pupil region, the output pupil region including at least one reflective diffractive out-coupler and at least one transmissive diffractive out-coupler.

**9.** The optical system of any one of claims 1-8, wherein the reflective diffractive in-coupler has a grating period $d_1$ and is configured to in-couple light using diffractive order $M_1$, the first transmissive diffractive in-coupler has a grating period $d_2$ and is configured to in-coupler light using diffractive order $M_2$, and wherein $\dfrac{d_1}{M_1} \leqslant \dfrac{d_2}{M_2}$ .

**10.** The optical system of any one of claims 1-9, further comprising an air gap between the reflective diffractive in-coupler and the first transmissive diffractive in-coupler.

**11.** The optical system of any one of claims 1-10, wherein the reflective diffractive in-coupler has a grating period smaller than a grating period of the first transmissive diffractive in-coupler.

**12.** An optical method comprising:

providing light having at least first and second colors at an input region of a waveguide, wherein the waveguide includes a first surface and a second surface substantially opposite the first surface, and wherein the input region includes a reflective diffractive in-coupler in the waveguide between the first and second surfaces and a first transmissive diffractive in-coupler in the waveguide between the reflective diffractive in-coupler and the second surface, wherein a spacing between the reflective diffractive in-coupler and the first transmissive diffractive in-coupler is no greater than 400nm;
coupling light of the first color into the waveguide using the reflective diffractive in-coupler; and
coupling light of the second color into the waveguide using the first transmissive diffractive in-coupler.

**13.** The method of claim 12, wherein the input region includes a second transmissive diffractive in-coupler on the first surface of the waveguide, and the method further includes:
coupling light of the first color into the waveguide using the second transmissive diffractive in-coupler.

**14.** The method of claim 12 or 13, wherein the reflective diffractive in-coupler has a grating period selected to couple blue light into the waveguide, and wherein the transmissive diffractive in-coupler has a grating period selected to couple red light into the waveguide.

**15.** A method of manufacturing an optical system as specified in claim 1, the method comprising:

forming a first diffraction grating on a first waveguide substrate layer;
forming a second diffraction grating on a second waveguide substrate layer; and
combining the first and second waveguide substrate layers into a combined waveguide with the first and second diffraction gratings on the interior of the combined waveguide, wherein a spacing between the first diffraction grating and the second diffraction grating in the combined waveguide is no greater than 400nm.

**Patentansprüche**

1.  Optisches System, umfassend:

    einen Wellenleiter (1200, 1900), der eine erste Fläche (1202, 1902) und eine zweite Fläche (1204, 1904), die der ersten Fläche im Wesentlichen gegenüberliegt, aufweist;
    einen reflektierenden diffraktiven Einkoppler (DG1) in dem Wellenleiter zwischen der ersten und der zweiten Fläche; und
    einen ersten durchlässigen diffraktiven Einkoppler (DG2) in dem Wellenleiter zwischen dem reflektierenden diffraktiven Einkoppler und der zweiten Fläche, wobei ein Abstand zwischen dem reflektierenden diffraktiven Einkoppler und dem ersten durchlässigen diffraktiven Einkoppler nicht größer als 400 nm ist.

2.  Optisches System nach Anspruch 1, wobei der reflektierende diffraktive Einkoppler eine Gitterperiode aufweist, die so gewählt ist, dass blaues Licht in den Wellenleiter eingekoppelt wird, und wobei der durchlässige diffraktive Einkoppler eine Gitterperiode aufweist, die so gewählt ist, dass rotes Licht in den Wellenleiter eingekoppelt wird.

3.  Optisches System nach Anspruch 1 oder 2, wobei der Abstand zwischen dem reflektierenden diffraktiven Einkoppler und dem durchlässigen diffraktiven Einkoppler im Bereich von 200 nm bis 350 nm liegt.

4.  Optisches System nach einem der Ansprüche 1-3, das des Weiteren einen zweiten durchlässigen diffraktiven Einkoppler auf der ersten Fläche des Wellenleiters umfasst.

5.  Optisches System nach Anspruch 4, wobei der zweite durchlässige diffraktive Einkoppler eine Gitterperiode aufweist, die so gewählt ist, dass blaues Licht in den Wellenleiter eingekoppelt wird.

6.  Optisches System nach Anspruch 4 oder 5, wobei der reflektierende diffraktive Einkoppler eine Gitterperiode $d_1$ aufweist und dazu eingerichtet ist, Licht unter Verwendung der diffraktiven Ordnung $M_1$ einzukoppeln, der zweite durchlässige diffraktive Einkoppler eine Gitterperiode $d_3$ aufweist und dazu eingerichtet ist, Licht unter Verwendung der diffraktiven Ordnung $M_3$ einzukoppeln, und wobei $\dfrac{d_3}{M_3} < \dfrac{d_1}{M_1}$ .

7.  Optisches System nach einem der Ansprüche 1-6, des Weiteren umfassend einen Bildgenerator (102, 176), der dafür ausgelegt ist, ein Bild in einer Eingangsregion bereitzustellen, die den reflektierenden diffraktiven Einkoppler und den ersten durchlässigen diffraktiven Einkoppler aufweist.

8.  Optisches System nach Anspruch 7, wobei das optische System dazu eingerichtet ist, das Bild in mindestens einer Ausgangspupillenregion im Wesentlichen zu replizieren, wobei die Ausgangspupillenregion mindestens einen reflektierenden diffraktiven Auskoppler und mindestens einen durchlässigen diffraktiven Auskoppler aufweist.

9.  Optisches System nach einem der Ansprüche 1-8, wobei der reflektierende diffraktive Einkoppler eine Gitterperiode $d_1$ aufweist und dazu eingerichtet ist, Licht unter Verwendung der diffraktiven Ordnung $M_1$ einzukoppeln, der erste durchlässige diffraktive Einkoppler eine Gitterperiode $d_2$ aufweist und dazu eingerichtet ist, Licht unter Verwendung der diffraktiven Ordnung $M_2$ einzukoppeln, und wobei $\dfrac{d_1}{M_1} < \dfrac{d_2}{M_2}$ .

10. Optisches System nach einem der Ansprüche 1-9, des Weiteren umfassend einen Luftspalt zwischen dem reflektierenden diffraktiven Einkoppler und dem ersten durchlässigen diffraktiven Einkoppler.

11. Optisches System nach einem der Ansprüche 1-10, wobei der reflektierende diffraktive Einkoppler eine Gitterperiode hat, die kleiner ist als eine Gitterperiode des ersten durchlässigen diffraktiven Einkopplers.

12. Optisches Verfahren, umfassend:

Bereitstellen von Licht, das mindestens eine erste und eine zweite Farbe hat, in einer Eingangsregion eines Wellenleiters, wobei der Wellenleiter eine erste Fläche und eine zweite Fläche, die der ersten Fläche im Wesentlichen gegenüberliegt, aufweist, und wobei die Eingangsregion einen reflektierenden diffraktiven Einkoppler in dem Wellenleiter zwischen der ersten und der zweiten Fläche und einen ersten durchlässigen diffraktiven Einkoppler in dem Wellenleiter zwischen dem reflektierenden diffraktiven Einkoppler und der zweiten Fläche aufweist, wobei ein Abstand zwischen dem reflektierenden diffraktiven Einkoppler und dem ersten durchlässigen diffraktiven Einkoppler nicht größer als 400 nm ist;
Einkoppeln von Licht der ersten Farbe in den Wellenleiter unter Verwendung des reflektierenden diffraktiven Einkopplers; und
Einkoppeln von Licht der zweiten Farbe in den Wellenleiter unter Verwendung des ersten durchlässigen diffraktiven Einkopplers.

13. Verfahren nach Anspruch 12, wobei die Eingangsregion einen zweiten durchlässigen diffraktiven Einkoppler auf der ersten Fläche des Wellenleiters aufweist, und das Verfahren des Weiteren umfasst:
Einkoppeln von Licht der ersten Farbe in den Wellenleiter unter Verwendung des zweiten durchlässigen diffraktiven Einkopplers.

14. Verfahren nach Anspruch 12 oder 13, wobei der reflektierende diffraktive Einkoppler eine Gitterperiode aufweist, die so gewählt ist, dass blaues Licht in den Wellenleiter eingekoppelt wird, und wobei der durchlässige diffraktive Einkoppler eine Gitterperiode aufweist, die so gewählt ist, dass rotes Licht in den Wellenleiter eingekoppelt wird.

15. Verfahren zur Herstellung eines optischen Systems nach Anspruch 1, wobei das Verfahren umfasst:

Bilden eines ersten Beugungsgitters auf einer ersten Wellenleitersubstratschicht;
Bilden eines zweiten Beugungsgitters auf einer zweiten Wellenleitersubstratschicht; und
Kombinieren der ersten und der zweiten Wellenleitersubstratschicht zu einem kombinierten Wellenleiter mit dem ersten und dem zweiten Beugungsgitter auf der Innenseite des kombinierten Wellenleiters, wobei ein Abstand zwischen dem ersten Beugungsgitter und dem zweiten Beugungsgitter in dem kombinierten Wellenleiter nicht größer als 400 nm ist.

**Revendications**

1. Système optique comprenant :

un guide d'onde (1200, 1900) présentant une première surface (1202, 1902) et une deuxième surface (1204, 1904) sensiblement opposée à la première surface ;
un coupleur d'entrée de réflexion et de diffraction (DG1) dans le guide d'onde entre les première et deuxième surfaces ; et
un premier coupleur d'entrée de transmission et de diffraction (DG2) dans le guide d'onde entre le coupleur d'entrée de réflexion et de diffraction et la deuxième surface, dans lequel un espacement entre le coupleur d'entrée de réflexion et de diffraction et le premier coupleur d'entrée de transmission et de diffraction n'est pas supérieur à 400 nm.

2. Système optique selon la revendication 1, dans lequel le coupleur d'entrée de réflexion et de diffraction présente une période de réseau sélectionnée pour coupler une lumière bleue dans le guide d'onde, et dans lequel le coupleur d'entrée de transmission et de diffraction présente une période de réseau sélectionnée pour coupler une lumière rouge dans le guide d'onde.

3. Système optique selon la revendication 1 ou 2, dans lequel l'espacement entre le coupleur d'entrée de réflexion et de diffraction et le coupleur d'entrée de transmission de diffraction est dans la plage de 200 nm à 350 nm.

4. Système optique selon l'une quelconque des revendications 1 à 3, comprenant en outre un deuxième coupleur d'entrée de transmission et de diffraction sur la première surface du guide d'onde.

**5.** Système optique selon la revendication 4, dans lequel le deuxième coupleur d'entrée de transmission et de diffraction présente une période de réseau sélectionnée pour coupler une lumière bleue dans le guide d'onde.

**6.** Système optique selon la revendication 4 ou 5, dans lequel le coupleur d'entrée de réflexion et de diffraction présente une période de réseau $d_1$ et est configuré pour coupler en entrée une lumière à l'aide d'un ordre de diffraction $M_1$, le deuxième coupleur d'entrée de transmission et de diffraction présente une période de réseau $d_3$ et est configuré pour coupler en entrée une lumière à l'aide d'un ordre de diffraction $M_3$, et dans lequel $\dfrac{d_3}{M_3} < \dfrac{d_1}{M_1}$.

**7.** Système optique selon l'une quelconque des revendications 1 à 6, comprenant en outre un générateur d'image (102, 176) fonctionnel pour fournir une image au niveau d'une région d'entrée incluant le coupleur d'entrée de réflexion et de diffraction et le premier coupleur d'entrée de transmission et de diffraction.

**8.** Système optique selon la revendication 7, dans lequel le système optique est configuré pour reproduire sensiblement l'image au niveau d'au moins une région de pupille de sortie, la région de pupille de sortie incluant au moins un coupleur de sortie de réflexion et de diffraction et au moins un coupleur de sortie de transmission et de diffraction.

**9.** Système optique selon l'une quelconque des revendications 1 à 8, dans lequel le coupleur d'entrée de réflexion et de diffraction présente une période de réseau $d_1$ et est configuré pour coupler en entrée une lumière à l'aide d'un ordre de diffraction $M_1$, le premier coupleur d'entrée de transmission et de diffraction présente une période de réseau $d_2$ et est configuré pour coupler en entrée une lumière à l'aide d'un ordre de diffraction $M_2$, et dans lequel $\dfrac{d_1}{M_1} < \dfrac{d_2}{M_2}$.

**10.** Système optique selon l'une quelconque des revendications 1 à 9, comprenant en outre un entrefer entre le coupleur d'entrée de réflexion et de diffraction et le premier coupleur d'entrée de transmission et de diffraction.

**11.** Système optique selon l'une quelconque des revendications 1 à 10, dans lequel le coupleur d'entrée de réflexion et de diffraction présente une période de réseau inférieure à une période de réseau du premier coupleur d'entrée de transmission et de diffraction.

**12.** Procédé optique comprenant :

la fourniture d'une lumière présentant au moins des première et deuxième couleurs au niveau d'une région d'entrée d'un guide d'onde, dans lequel le guide d'onde inclut une première surface et une deuxième surface sensiblement opposée à la première surface, et dans lequel la région d'entrée inclut un coupleur d'entrée de réflexion et de diffraction dans le guide d'onde entre les première et deuxième surfaces et un premier coupleur d'entrée de transmission et de diffraction dans le guide d'onde entre le coupleur d'entrée de réflexion et de diffraction et la deuxième surface, dans lequel un espacement entre le coupleur d'entrée de réflexion et de diffraction et le premier coupleur d'entrée de transmission et de diffraction n'est pas supérieur à 400 nm ;
le couplage d'une lumière de la première couleur dans le guide d'onde à l'aide du coupleur d'entrée de réflexion et de diffraction ; et
le couplage d'une lumière de la deuxième couleur dans le guide d'onde à l'aide du premier coupleur d'entrée de transmission et de diffraction.

**13.** Procédé selon la revendication 12, dans lequel la région d'entrée inclut un deuxième coupleur d'entrée de transmission et de diffraction sur la première surface du guide d'onde, et le procédé inclut en outre :
le couplage d'une lumière de la première couleur dans le guide d'onde à l'aide du deuxième coupleur d'entrée de transmission et de diffraction.

**14.** Procédé selon la revendication 12 ou 13, dans lequel le coupleur d'entrée de réflexion et de diffraction présente une période de réseau sélectionnée pour coupler une lumière bleue dans le guide d'onde, et dans lequel le coupleur d'entrée de transmission et de diffraction présente une période de réseau sélectionnée pour coupler une lumière rouge dans le guide d'onde.

**15.** Procédé de fabrication d'un système optique selon la revendication 1, le procédé comprenant :

la formation d'un premier réseau de diffraction sur une première couche de substrat de guide d'onde ;

la formation d'un deuxième réseau de diffraction sur une deuxième couche de substrat de guide d'onde ; et
la combinaison des première et deuxième couches de substrat de guide d'onde dans un guide d'onde combiné avec les premier et deuxième réseaux de diffraction sur l'intérieur du guide d'onde combiné, dans lequel un espacement entre le premier réseau de diffraction et le deuxième réseau de diffraction dans le guide d'onde combiné n'est pas supérieur à 400 nm.

FIG. 1A

EP 4 176 302 B1

IMAGE GENERATOR

176

178

180

182

180

184

186

188

190

FIG. 1E

170

172

174

FIG. 1D

FIG. 2

FIG. 3

Displayed Image

Image Plane

Aperture Stop

Each Pixel has a $\Theta,\Phi$ Direction after the
Waveguide, this Direction Should be kept

FIG. 4

EP 4 176 302 B1

FIG. 5

Incoming
Plane Wave

Diffracted
Plane Waves

Diffracted
Plane Waves

## FIG. 6

$W_{max}$

$\theta$

$\eta_{T1}$

$\eta_{T1}$

D

## FIG. 7

d

c

h

$\varphi_1$

$\varphi_2$

## FIG. 8

FIG. 9

FIG. 10

FIG. 11A

FIG. 11B

B + G + R

FIG. 12

1202

1200

DG1

DG2

1204

FIG. 13

FIG. 14

FIG. 15

Layers of Material with Refractive index n2

FIG. 16A

FIG. 16B

FIG. 16C

Unit Cell

$n_2$

$n_4$

$n_1$

$h_a$

Phase-modifying Layer

Stop-layer

$n_3$

$h_{SL}$

$h_{PM}$

$n_2$

FIG. 17

Reflection and Transmission of TE Wave

FIG. 18A

Reflection and Transmission of TE Wave

FIG. 18B

EP 4 176 302 B1

Reflection and Transmission of TE Wave

FIG. 18C

EP 4 176 302 B1

FIG. 19

FIG. 20A          FIG. 20B          FIG. 20C

EP 4 176 302 B1

FIG. 21A

FIG. 21B

FIG. 21C

Unit Cell

$W_3$

$n_1$

$n'_{SL}$

$n'_{PM}$

$n_5$

$h_3$

$h'_{SL}$

$h'_{pm}$

$n_2$

$d_3$

# FIG. 22

Reflection and Transmission of TE Wave

FIG. 23A

EP 4 176 302 B1

Reflection and Transmission of TE Wave

FIG. 23B

EP 4 176 302 B1

FIG. 23C

FIG. 24

FIG. 25

**EP 4 176 302 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20305744 A
- WO 2017180403 A

- US 2019187465 A

**Non-patent literature cited in the description**

- **B. C. KRESS**. Optical waveguide combiners for AR headsets: features and limitation. *Proc. of SPIE*, 2019, vol. 11062, 110620J